# FASCICULE DE BREVET EUROPEEN

(11) **EP 0 645 006 B1**
(45) Date de publication et mention de la délivrance du brevet: **26.11.1997**
(21) Numéro de dépôt: 93913109.0
(22) Date de dépôt: 10.06.1993
(51) Int. Cl.: G01N 1/00, G01N 35/00

(54) **DISPOSITIF DE TRANSFERT, D'AGITATION ET DE PRELEVEMENT D'ECHANTILLONS DE PRODUITS SANGUINS EN TUBES REGROUPES DANS DES CASSETTES**
VORRICHTUNG ZUM TRANSFERIEREN, RUEHREN UND ENTNEHMEN VON BLUTPRODUKTEN AUS PROBEROEHRCHEN, DIE IN EINEN GESTELL ANGEORDNET SIND
DEVICE FOR THE TRANSFER, AGITATION AND SAMPLING OF BLOOD PRODUCTS IN TUBES GROUPED IN CASSETTES

(30) Priorité: 11.06.1992 FR 9207036
(43) Date de publication de la demande: 29.03.1995
(73) Titulaire: ABX , Société Anonyme dite, F-34184 Montpellier Cédex 4 (FR)
(72) Inventeur: CHAMPSEIX, Henri, F-34980 Montferrier/Lez (FR); CHAMPSEIX, Serge, F-34820 Teyran (FR)
(74) Mandataire: Lhuillier, René
(86) Numéro de dépôt international: FR9300553
(87) Numéro de publication internationale: WO9325885

(56) Documents cités:
- EP-A- 0 061 317
- EP-A- 0 263 753
- US-A- 4 609 017
- US-A- 4 727 032

## Description

L'invention se situe dans le domaine technique des analyseurs hématologiques dans lesquels des échantillons de sang sont analysés automatiquement, et concerne plus précisément un nouveau dispositif de transfert desdits échantillons contenus dans des récipients fermés, et préalablement regroupés dans des cassettes, jusqu'à l'appareil analyseur.

On sait que pour analyser des échantillons de sang contenus dans des éprouvettes scellées, il faut déplacer les éprouvettes jusqu'à l'appareil analyseur, les agiter pour mélanger le sang, puis percer les bouchons de fermeture afin de prélever et transférer un peu de produit jusqu'à l'analyseur. Afin d'éviter autant que possible des manipulations successives, on a cherché à automatiser toutes ces opérations. On connaît notamment un procédé automatisé qui consiste à déplacer des cassettes de tubes d'échantillons à l'aide d'un organe transporteur entre une zone d'entrée dans l'analyseur et une zone de sortie, une station de perçage du bouchon obturateur étant prévue entre les deux. Pour cela les cassettes sont reçues une par une sur une table de pivotement et une courroie de déplacement combinées. La table à courroie de déplacement pivote plusieurs fois autour de son axe longitudinal pour que les tubes effectuent des demi-tours et que leurs bouchons obturateurs passent successivement d'une position haute à une position basse, et cela jusqu'à ce que le matériau échantillonné soit bien mélangé. Puis on arrête l'organe transporteur pendant un temps suffisant pour pouvoir assurer le perçage du bouchon obturateur et alimenter ensuite l'analyseur. Ce procédé tel que décrit dans le EP-A-0159347, et son appareil de mise en oeuvre qui constitue un système totalement intégré et automatisé renfermant un analyseur hématologique, présente cependant un certain nombres d'inconvénients inhérents à sa conception. Ainsi dans un compartiment d'entrée de l'appareil, il convient au préalable d'empiler une à une à la main des cassettes remplies de tubes d'échantillons obturés. En outre un mécanisme abaisseur doit extraire une cassette de cet empilement avant qu'il ne soit pris en charge par le moyen de transport du genre d'une courroie de transfert pour subir ensuite une agitation et un déplacement. Cette agitation résultant de basculements et non de retournements complets doit être répétée plusieurs fois, ce qui retarde les opérations suivantes de prélèvements. La table de pivotement assure donc le basculement d'avant en arrière de la cassette avant de s'immobiliser pour qu'un premier tube d'échantillon soit déplacé partiellement en dehors du casier en vue du prélèvement par une sonde d'aspiration qui aura percé le bouchon. Cette disposition combine donc un certain nombre de mécanismes qui n'autorisent pas des cadences soutenues, ni un nouveau prélèvement sur un tube précédemment prélevé.

On connait aussi par le EP-A-061 317 un dispositif d'agitation et de prélèvement d'échantillons de produits sanguins en tubes regroupés dans des cassettes, mais dans ce dispositif, les cassettes sont agitées par la rotation d'un tambour qui maintient un grand nombre de cassettes ensemble.

En vue notamment de pallier à ces inconvénients en même temps que proposer un dispositif moderne qui améliore le processus d'agitation et autorise de plus grandes cadences sans immobilisation durant les phases de chargement ou de déchargement, la Demanderesse a mis au point un dispositif tout à fait différent.

Aussi un objet principal de la présente invention consiste en un dispositif de transfert, d'agitation et de prélèvement d'échantillons de produits sanguins en tubes regroupés dans des cassettes notamment pour analyseurs hématologiques dans lequel les cassettes sont transférées et positionnées dans une alvéole d'un chariot rotatif qui assure par rotation le mélange des échantillons, et s'immobilise pour le prélèvement des tubes de la cassette, qui est effectué par une station de prélèvement déplaçable vis-à-vis des tubes temporairement immobilisés en position verticale, bouchon obturateur vers le bas, dispositif selon lequel chaque cassette garnie de tubes d'échantillons est extraite du réceptacle de stockage par un mécanisme qui la transfère dans une alvéole du chariot rotatif, selon lequel ledit chariot rotatif dispose de deux berceaux en forme de U symétriques par rapport à son arbre de rotation, ouverts vers l'extérieur, berceaux qui servent d'alvéoles pour le maintien et le guidage des cassettes et selon lequel un mécanisme complémentaire assure l'éjection de la cassette vers un bac de réception.

Selon encore une autre caractéristique principale de l'invention, le mécanisme qui assure le déplacement et le positionnement d'une cassette dans une alvéole du chariot rotatif, ainsi que le mécanisme complémentaire assurant l'éjection de la cassette vers le bac de réception, sont formés par un unique chariot de chargement et d'éjection qui se déplace du réceptacle de stockage au chariot rotatif et vice et versa en coulissant sur un organe de guidage linéaire, parallèlement à l'arbre du chariot rotatif, et il supporte un ergot d'éjection fixe par rapport à lui-même et orienté dans le sens de l'arbre du chariot rotatif. En outre le chariot de chargement et d'éjection supporte un vérin assurant la manoeuvre d'un doigt de chargement escamotable se déplaçant perpendiculairement à l'arbre du chariot rotatif. Le vérin d'éjection est monté sur une potence solidaire du chariot de chargement et d'éjection.

Selon encore une autre caractéristique de l'invention, le mécanisme qui assure le positionnement d'une cassette dans une alvéole du chariot rotatif en écartant les clips est constitué d'une pluralité de butées escamotables qui sont entraînées à basculer sous l'action d'un moteur pour retenir et libérer pas à pas, par gravité, les cassettes dans le chariot rotatif.

Avantageusement une pluralité de butées hautes sont montées au même niveau sur des axes hauts, et une pluralité de butées basses sont montées à un niveau inférieur sur des axes entraînés simultanément en rotation et se développant vers l'extérieur, respectivement à partir de deux pignons hauts et bas entraînés par le moteur. Les butées hautes ont la forme d'un cliquet symétrique par rapport à leur axe, dont les pointes sont orientées vers l'intérieur, en direction de l'axe haut voisin, tandis que les butées basses sont asymétriques par rapport à leur axe et orientées vers l'intérieur, en direction de l'axe bas voisin.

Selon une variante de réalisation, le mécanisme qui assure le positionnement d'une cassette dans une alvéole du chariot rotatif est constitué de deux volets et de deux ergots pivotants qui sont entraînés à basculer sous l'action d'un moteur unique pour retenir la pile de cassettes et/ou libérer une cassette dans le chariot rotatif.

Selon une autre caractéristique de l'invention, le mécanisme complémentaire d'éjection d'une cassette hors du chariot rotatif est constitué de deux éjecteurs coulissant dans un bloc de guidage fixe, éjecteurs dont la tête traverse des ouvertures du chariot rotatif pour pousser la cassette hors dudit chariot.

Selon une caractéristique particulière de l'invention, la station de prélèvement peut atteindre aussi un support fixe d'un tube destiné à un prélèvement d'urgence, et en sortie de l'appareil est prévu un mécanisme pousseur destiné à pousser les cassettes dans le panier de recueil.

D'autres caractéristiques et avantages de l'invention apparaîtront à la lecture de la description suivante d'un exemple non limitatif de réalisation du dispositif et de son fonctionnement. Il y sera fait référence aux dessins annexés qui représentent :
Figure 1 une vue d'ensemble en perspective d'un analyseur hématologique
Figures 2 et 3 des vues en coupe verticale respectivement longitudinale et transversale d'un panier de cassettes
Figure 4 une vue en perspective d'un panier de cassettes
Figures 5 et 6 des vues schématiques, respectivement en élévation et en plan, du dispositif de transfert
Figure 7 une vue en perspective du perceur mobile
Figures 8 et 11 des vues en coupe transversale à plus grande échelle du chariot de déchargement et d'éjection et du chariot rotatif, respectivement en position de chargement et en position de prélèvement
Figures 9 et 10 des vues en perspective respectivement du chariot rotatif et du chariot de chargement et d'éjection
Figure 12 une vue partielle en perspective de l'avant de l'analyseur hématologigue selon une variante de réalisation
Figure 13 une vue en plan d'une cassette
Figures 14 et 15, des vues en coupe respectivement selon XIV-XIV et XV-XV de la figure 13
Figure 16 une vue en perspective d'une variante de réalisation de chariot rotatif.
Figure 17 une vue en perspective d'une variante de réalisation du mécanisme d'éjection
Figure 18, une vue partielle en perspective du bac de réception de l'analyseur hématologique selon une variante de réalisation
Figure 19, une vue schématique en plan des éléments de la variante du dispositif de transfert
Figure 20, une vue en perspective du mécanisme à butées escamotables
Figures 21 à 23 des vues scnématiques du mécanisme à butées escamotables et du chariot rotatif au cours de ses phases de chargement-déchargement
Figures 24 et 25 des vues en perspective d'une variante de réalisation du mécanisme de chargement
Figures 26 à 30 des vues en élévation de cette variante de mécanisme de chargement au cours des diverses phases de chargement-déchargement.
Figure 31 une vue en perspective d'une autre variante de réalisation de mécanisme d'éjection
Figure 32 une vue en perspective d'une autre variante de réalisation du chariot rotatif
Figure 33 une vue en perspective d'une autre variante de réalisation du perceur mobile

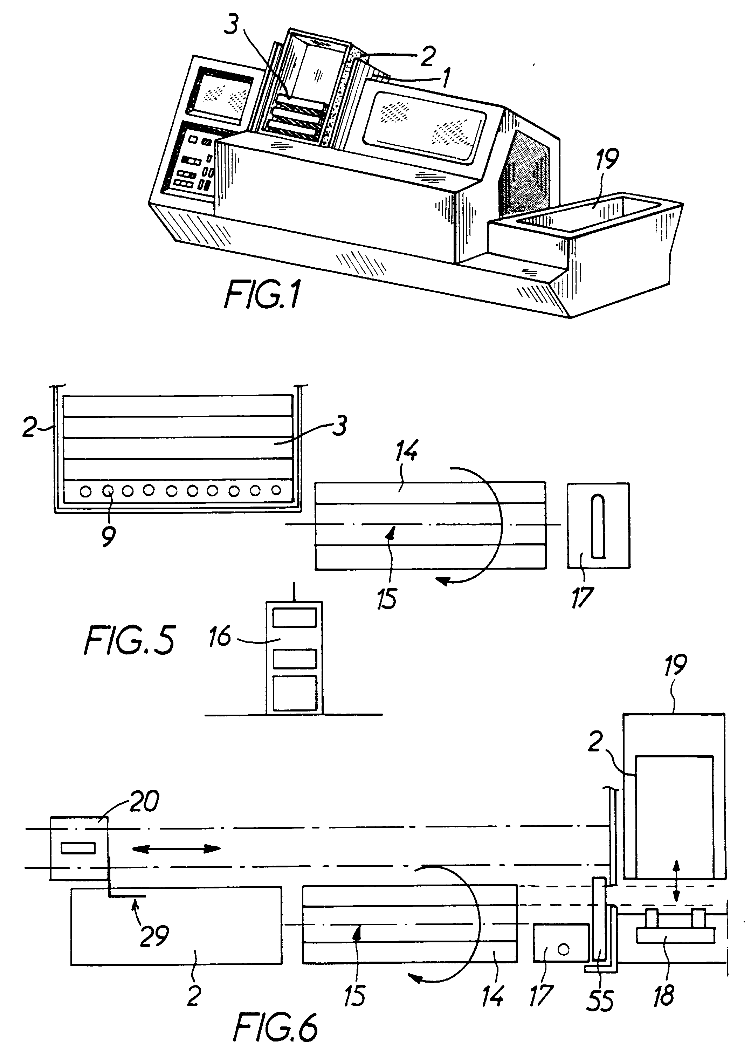

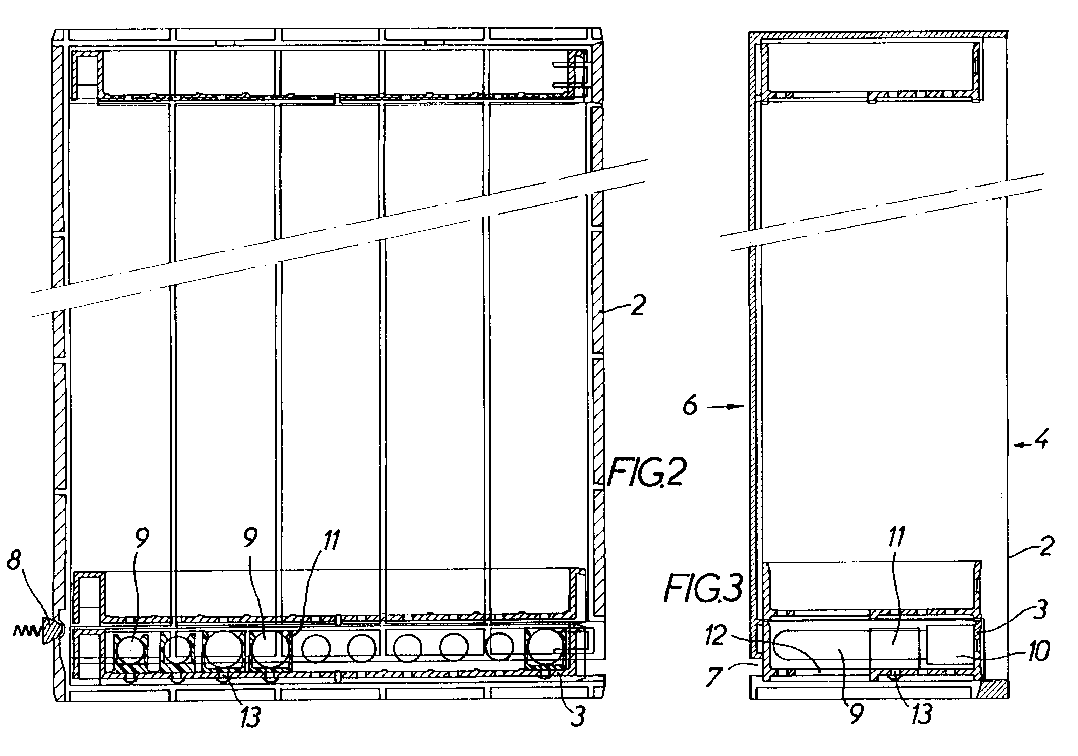

L'analyseur hématologique représenté à la figure 1 dispose vers une de ses extrémités d'une alvéole 1 ouverte vers le haut qui forme un réceptacle dans lequel on peut placer un panier 2. Le panier est garni sur toute sa hauteur de cassettes 3 qui sont empilées les unes sur les autres. On voit sur les figures 2, 3 et 4 qu'un panier 2 se présente comme une boîte parallélipipédique ayant une face avant ouverte 4 et une face arrière verticale 6 disposant à sa partie basse d'une lumière transversale 7 permettant le passage d'un organe qui permettra de dégager la cassette du panier comme on le verra plus loin. Le panier 2, en bout de la lumière 7, et sur une de ses parois latérales est percé d'une ouverture 37 permettant le passage d'une cassette 3. Une autre ouverture analogue 38 est prévue en partie haute sur la même paroi latérale. Enfin sur la paroi horizontale formant le plafond du panier, apparaissent deux orifices 39 destinés au passage de poussoirs comme cela ressortira de la suite de la description. Chaque cassette 3 forme un récipient plat dans lequel sont disposés côte à côte plusieurs tubes 9 d'échantillon obturés par un bouchon 10. Les tubes sont maintenus en place par des clips 11 avantageusement en matière plastique et dont les ailes sont élastiques, et qui sont fixés de façon connue par un rivet 13 ou un autre moyen de fixation au fond de la cassette. Une échancrure longitudinale 12 est prévue sur toute la longueur du fond de la cassette pour permettre d'atteindre les tubes et les dégager des clips. La figure 2 montre que les tubes peuvent être de diamètre différent. Rien n'empêche non plus que les tubes soient de longueur différente, l'essentiel étant que leurs bouchons soient alignés le long d'une bordure de la cassette.

A l'intérieur de la partie centrale de l'analyseur de la figure 1, se trouve le mécanisme d'agitation et de prélèvement dont les schémas de principe sont représentés aux figures 5 et 6. A côté du réceptacle 1 renfermant le panier 2 de cassettes 3 est disposé un chariot rotatif 14 pouvant tourner autour de son arbre longitudinal 15. On voit que les tubes d'échantillon 9 s'étendent perpendiculairement audit arbre 15. Au-dessous du chariot rotatif 14 peut se déplacer une station de prélèvement 16 susceptible de s'immobiliser sous chacun des tubes placés sur le chariot. Au voisinage immédiat du chariot rotatif 14 se trouve un support fixe 17 d'un tube destiné à un prélèvement d'urgence.

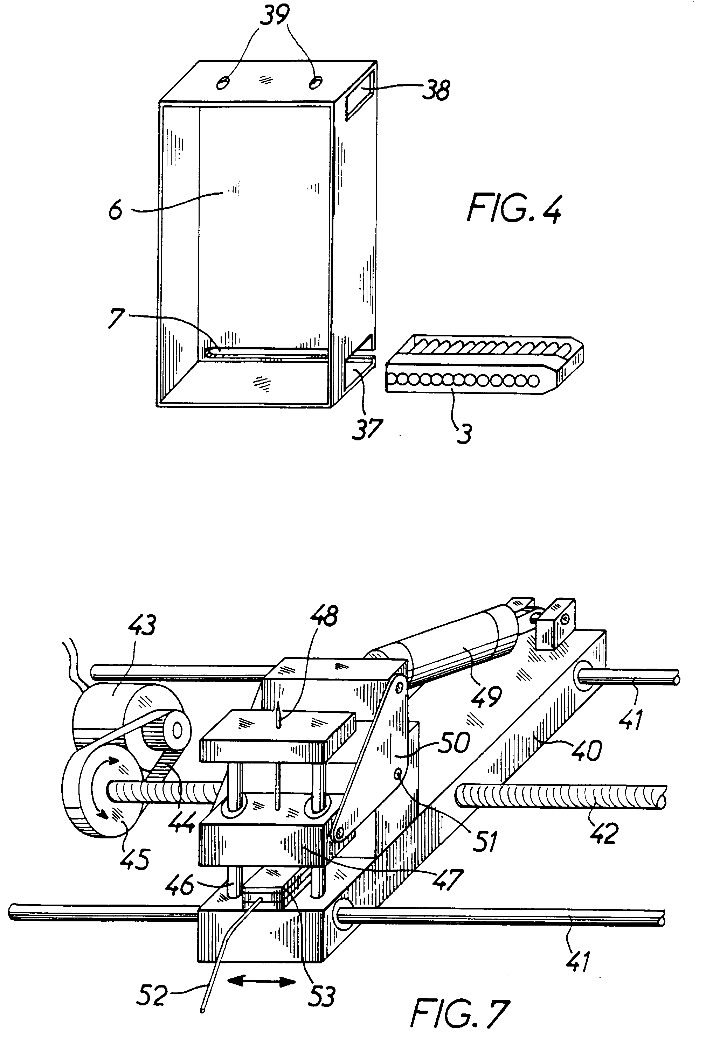

La station 16 appelée aussi perceur mobile est décrite en référence à la figure 7. Elle est constituée d'un socle 40 susceptible de glisser sur des axes 41 sous l'action d'une vis rotative 42 entraînée par un moteur 43 par l'intermédiaire d'une courroie crantée 44 et d'une poulie d'entraînement 45.

Sur le socle 40 se dressent des colonnes de guidage 46 sur lesquelles coulisse une platine 47 portant une aiguille de prélèvement verticale 48, pointe orientée vers le haut. La platine 47 est déplacée de bas en haut sous l'action d'un vérin 49 faisant pivoter des flasques 50 articulés sur un axe 51. Le socle 40 porte en outre une autre aiguille 52 destinée à des microprélèvements, qui elle, est orientée vers le bas. Une vanne d'échantillonnage 53 assure le recueil et la distribution du sang prélevé par l'une ou l'autre des aiguilles.

A la sortie de l'appareil, (voir figure 6) au-delà du support fixe 17, est prévu un poussoir 18 qui permet de déplacer latéralement une cassette en direction d'un panier de recueil 2 disposé à plat dans un bac de réception 19 (figure 1). Les orifices 39 évoqués plus haut servent au passage des tiges dudit poussoir.

La figure 6 montre que parallèlement à l'arbre 15, mais dans un plan vertical différent de celui du panier et du chariot rotatif, se déplace un chariot de chargement et d'éjection 20 dont le rôle est de dégager les cassettes du panier 2 et de les placer sur le chariot rotatif 14 et de les dégager et les placer dans le panier de recueil.

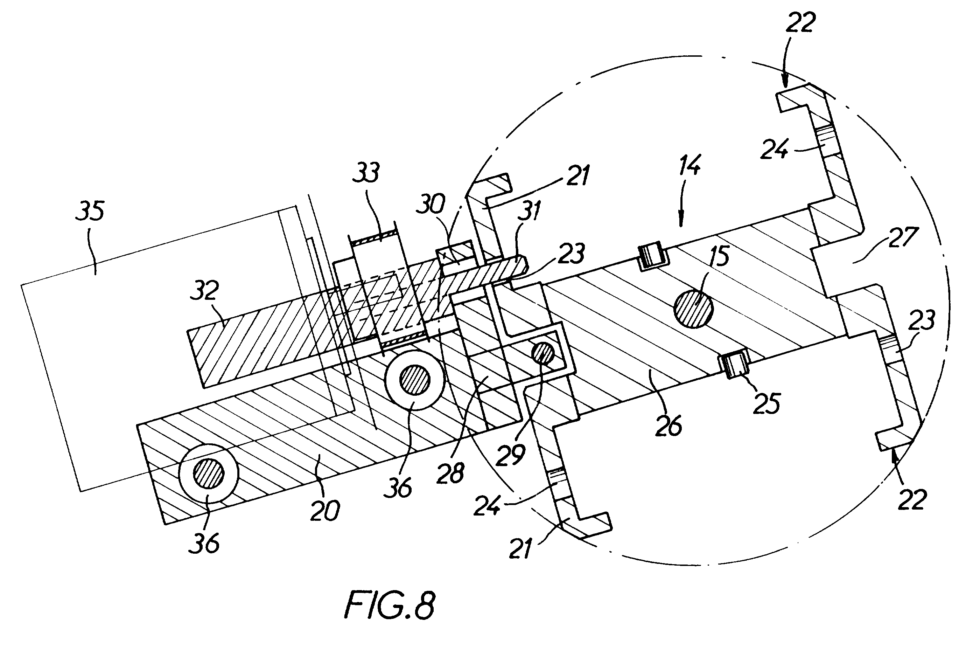

Les figures 8, 9 et 11 illustrent de façon plus détaillée le montage du chariot 20 par rapport au chariot rotatif 14. Ce dernier dispose de deux berceaux 21 en forme de U symétrique par rapport à l'arbre 15, ouverts vers l'extérieur et encadrant un corps central 26 de forme parallèlépipédique. Les berceaux 21 destinés à recevoir chacun une cassette se prolongent par des petits rebords 22 faisant retour au dessus des berceaux et servant au maintien et au guidage des cassettes. L'un des flancs du berceau est ouvert à une de ses extrémités d'une encoche 23 et l'autre est percé d'une pluralité d'orifices 24 correspondant au nombre de tubes d'une cassette. Le corps central 26, au fond des berceaux, est échancré pour recevoir un clips 25 de verrouillage des cassettes. Enfin une rainure de dégagement 27 est prévue sur le corps central, entre les berceaux, symétriquement par rapport à l'arbre 15.

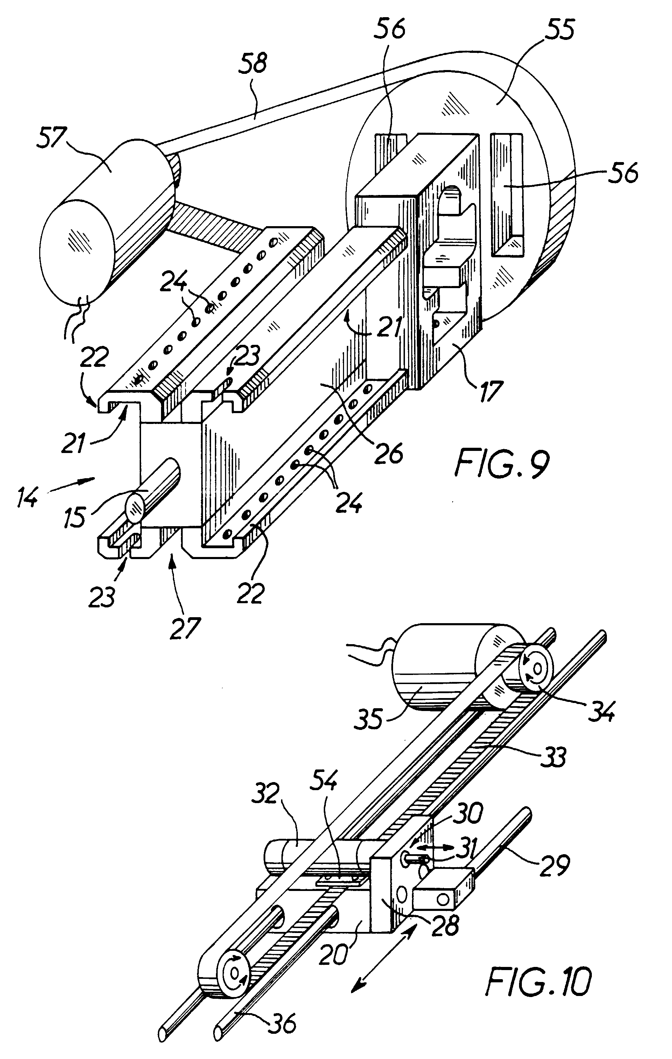

On a vu que le chariot rotatif 14 était monté sur un arbre 15. Ce dernier déborde du chariot derrière le support 17 jusqu'à une poulie d'entraînement 55 visible à la figure 9. Cette poulie est d'un diamètre au moins égal au débattement du chariot rotatif dont la trace est marquée notamment à la figure 8. La poulie 55 est percée de deux ouverture rectangulaires 56 destinées au passage des cassettes en phase d'éjection. La poulie est entraînée en rotation par un moteur 57 par l'intermédiaire d'une courroie crantée 58.

Le chariot de chargement 20 visible aux figures 8 10 et 11 se termine à proximité du chariot rotatif 14, par une potence 28 qui supporte un ergot d'éjection 29 fixe par rapport au chariot, se développant dans le sens de l'arbre 15 comme on peut le voir aussi à la figure 6. La potence est en outre percée d'un orifice 30 pour le passage d'un doigt de chargement escamotable 31 constitué par la tige mobile d'un vérin 32 porté par ledit chariot. Le doigt se déplace perpendiculairement à l'arbre 15 du chariot rotatif 14. Le déplacement du chariot 20 est assuré par une courroie crantée sans fin 33 dont le brin inférieur est fixé à l'aide d'une plaquette 54 sur la face supérieure du chariot. La courroie crantée est entraînée par une poulie motrice 34 elle-même reliée à un moteur 35. Le chariot 20 est donc en mesure de se déplacer du panier 2 au chariot rotatif 14 et à la poulie 55 et vice-versa en coulissant sur des axes de guides à billes 36, parallèlement à l'arbre 15 du chariot rotatif.

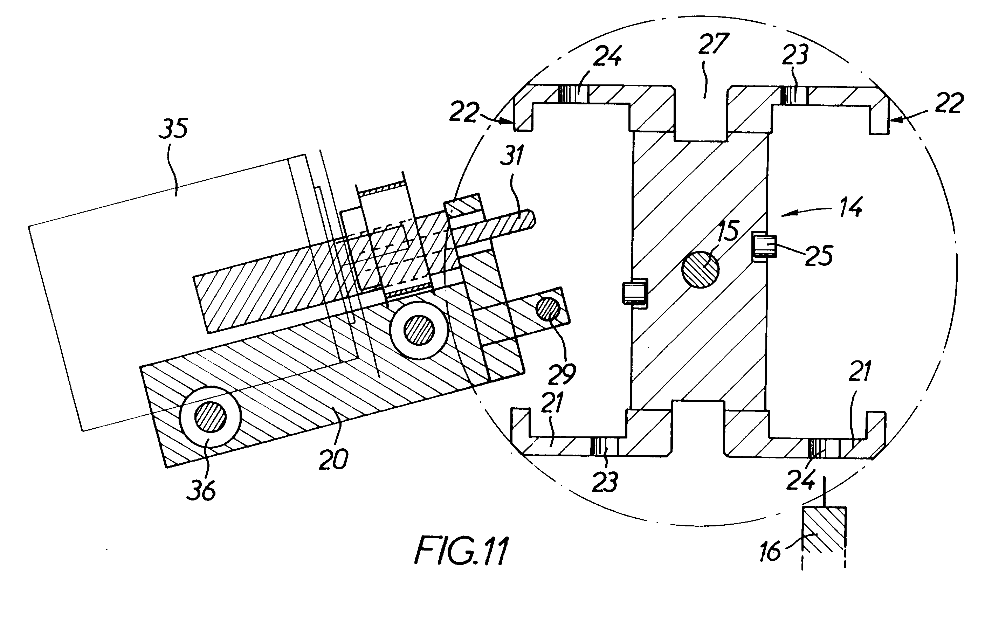

A la figure 8, le chariot rotatif 14 est en position de chargement . En se référant également aux figures 5 et 6, on décrit maintenant le fonctionnement du dispositif. Le chariot 20 a pour fonction de dégager la cassette inférieure 3 hors du panier 2. On a vu que le panier était conçu pour autoriser ce dégagement. Le moteur 35 entraîne la courroie crantée 33 qui va faire glisser le chariot 20 sur les axes des guides à billes 36, c'est à dire de l'avant vers l'arrière sur la figure 8 ou de la gauche vers la droite sur la figure 6. L'ergot 29 va donc se déplacer parallèlement à l'arbre 15, en cheminant à l'intérieur de la rainure de dégagement 27 prévue à cet effet. Par contre durant ce mouvement c'est le doigt escamotable 31 qui va pousser la cassette, l'extraire du panier, et la placer dans le berceau supérieur 21 en s'engageant en fin de course dans l'encoche correspondante 23 ; puis il se rétracte. Le chariot 20 peut alors revenir à sa position de départ et libérer le cnariot rotatif 14 qui va tourner ce 180° sous l'action ce ia poulie 55 pour placer cette fois le berceau inférieur en position haute et le présenter au chargement de la deuxième cassette, selon le processus précédent. Le chariot de chargement revient encore une fois à sa position de départ, et le chariot rotatif effectue un certain nombre de rotations pour agiter les tubes puis il s'immobilise en position verticale comme le montre la figure 11. La station de prélèvement 16, visible aux figures 5 et 7 va alors se déplacer sous la cassette immobilisée dans le berceau extérieur 21 du chariot rotatif. Les tubes portés par la cassette ainsi immobilisée sont en position verticale, bouchon obturateur vers le bas. Le produit du premier tube est alors prélevé. Quand ce prélèvement est terminé, la station 16 revient à son point de départ ce qui autorise une nouvelle agitation par rotation du chariot. Durant ce temps, le produit prélevé dans le premier tube est analysé. Ensuite la station se place - après une nouvelle immobilisation du chariot - sous le second tube de la cassette...etc. Quand le dernier tube a été prélevé, c'est bien évidemment la cassette de l'autre berceau qui va s'immobiliser en position verticale afin d'être prélevée à son tour. La cassette prélevée qui se trouve donc au coté au chariot de chargement va pouvoir être éjectée. Pour ce faire l'ergot 31 se rétracte pour autoriser le chariot 20 à se déplacer à nouveau en direction du chariot rotatif 14 sans entraîner la cassette 3 suivante du panier 2,jusqu'à ce que l'ergot 29 attaque le flanc de la cassette vide immobilisée dans son berceau et la dégage du chariot rotatif. On voit à la figure 6 que le chariot 20 peut dépasser ledit chariot rotatif et pousser la cassette vide au delà du support fixe 17. La cassette traversera ensuite la poulie 55 immobile, par une ouverture 56 (figure 9) avant d'être sollicitée par le mécanisme pousseur 18 qui la dégagera dans le panier 2 mis à plat sur la surface de recueil 19.

Les cassettes vides se retrouveront empilées dans ce panier de recueil, dont on peut si nécessaire les extraire une à une. On récupère aisément ainsi la totalité du panier.

On a vu qu'avant le poste de recueil des cassettes vides, se trouve un support fixe 17 pour un tube d'échantillon.

Ce poste permet un prélèvement en urgence ou un microprélèvement. Rien n'interdit en effet à la station mobile de prélèvement 16 de s'écarter un moment hors de la zone du chariot rotatif 14, sur appel manuel. Ce prélèvement particulier est rendu possible grâce à la mobilité de la station de prélèvement déplaçable par rapport au poste fixe. En outre cette opération se fait sans ouvrir le tube - donc sans risque de pollution et elle autorise la lecture du code à barre du tube en urgence, le code à barre se déplaçant avec la station de prélèvement.

Pour un prélèvement en urgence d'un tube placé dans le support 17, c'est l'aiguille 48 du perceur mobile qui par un mouvement ascendant traversera un orifice dudit support pour atteindre le tube fermé placé à l'envers.

Pour un microprélèvement, on présente un tube manuellement à l'aiguille fixe 52.

Le dispositif précédemment décrit offre la possibilité de deux ou plusieurs prélèvements ou d'un nouveau prélèvement sur un tube préalablement déjà prélevé, puisque la station peut faire des marche-arrière. En outre les cadences de prélèvement sont plus élevées qu'avec les matériels connus, car les possibilités de déchargement de cassettes s'effectuent durant ces prélèvements, d'où gain de temps et économies de personnel.

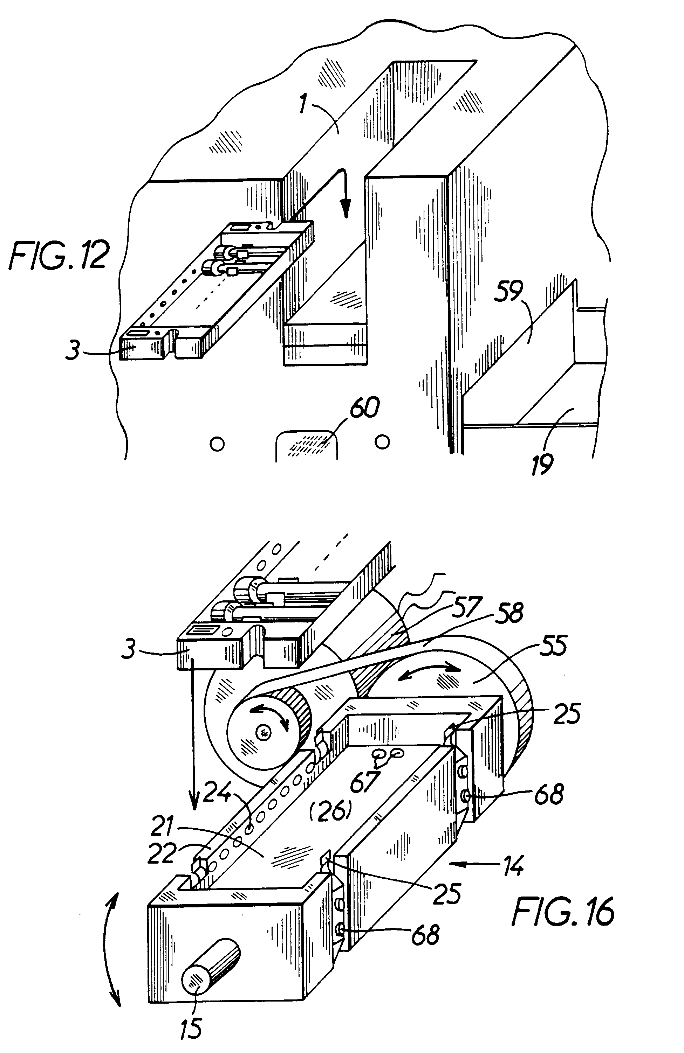

Les figures 12 à 23 représentent une autre variante de réalisation d'un dispositif de transfert d'échantillons selon l'invention. L'analyseur hématologique a sensiblement la même configuration que celle illustrée à la figure 1. Toutefois les cassettes 3 ne sont plus disposées dans un panier, mais empilées les unes sur les autres directement dans l'alvéole 1 de l'analyseur. La figure 12 illustre schématiquement la partie avant de l'analyseur. L'alvéole 1, dans cette variante, se trouve au dessus de la partie centrale de l'analyseur renfermant le chariot rotatif. Sur le côté, on retrouve le bac de réception 19 qui communique avec la partie centrale par une ouverture 59. La face avant de l'analyseur est pourvue d'une fenêtre 60 permettant le passage de l'aiguille de microprélèvement.

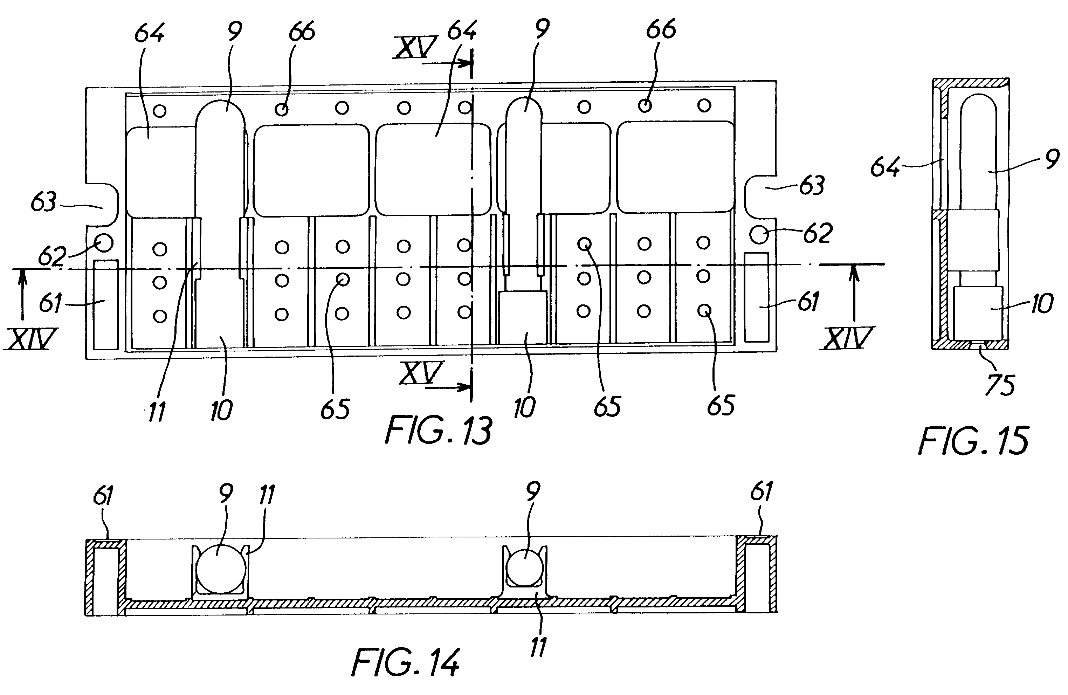

La cassette 3 utilisée dans cette variante de réalisation est représentée aux figures 13, 14 et 15. On pourrait aussi utiliser la cassette décrite en référence aux figures 2 et 3. Elle dispose à chacune de ses extrémités, d'une partie rectangulaire en dépression par rapport à sa surface voisine pour loger une étiquette 61, d'un trou 62 destiné au passage d'éjecteurs et d'une échancrure centrale 63. Les tubes d'échantillon 9 fermés par un bouchon 10 sont maintenus par les clips 11. On remarque notamment aux figures 13 et 15 des ouvertures 64 permettant de sortir les tubes de la cassette. Les petits trous 65 visibles à la figure 13 servent à la fixation des clips sur la cassette, et la rangée de petits trous 66 alignés le long d'une bordure est prévue pour le maintien de cales (non représentées) utilisables avec des tubes de plus faible longueur. La figure 15 montre enfin que des orifices 75 sont prévus à la base de la cassette, au droit de chaque tube pour le passage de l'aiguille de prélèvement.

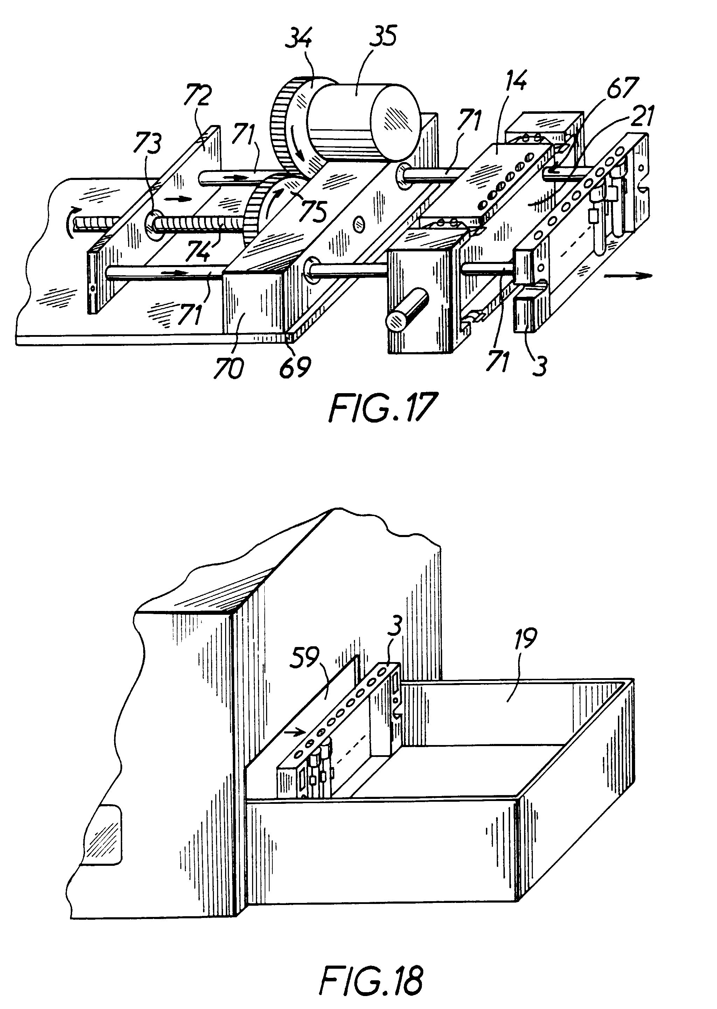

Le chariot rotatif 14, selon cette variante de réalisation illustrée par la figure 16, présente également deux berceaux 21 en forme de U symétriques par rapport à son arbre de rotation 15. Les rebords 22 sont percés des orifices 24 correspondant aux tubes de la cassette. On remarquera à chaque extrémité des berceaux des clips 25 servant à maintenir la cassette en place sur le chariot, lesdits clips étant fixés par les vis 68. Le corps central 26 est en outre percé d'ouvertures 67 pour le passage des éjecteurs. L'arbre 15 déborde du chariot rotatif 14 jusqu'à la poulie d'entraînement 55 reliée au moteur 57 par la courroie crantée 58. On voit sur cette figure que le chariot rotatif 14 est en position horizontale c'est-à-dire qu'un des deux berceaux 21 est ouvert vers le haut et prêt à recevoir une cassette 3 provenant de l'alvéole de l'analyseur, disposée juste au dessus, comme on l'a indiqué précédemment.

Le mécanisme qui permet d'éjecter une cassette 3 hors du chariot rotatif 14 est représenté à la figure 17. Sur une platine support fixe 69 est rapporté un bloc de guidage 70 de deux éjecteurs coulissants 71. Ces derniers sont reliés à leurs extrémités à une même plaque 72 susceptible de se déplacer au dessus de la platine 69. A cet effet la plaque est équipée d'un écrou 73 coopérant avec une vis tournante 74 laquelle étant entraînée par le pignon 34 d'un moteur 35 solidaire du bloc de guidage, par l'intermédiaire d'un pignon 75 monté en bout de la vis 74. Le chariot rotatif 14 est monté ici en position d'éjection c'est-à-dire qu'il a basculé de 90° par rapport à la position de la figure 16. Les berceaux 21 se trouvent orientés verticalement. On voit une cassette 3 éjectée (vers la droite sur la figure) par la tête des éjecteurs 71 qui ont traversé les ouvertures 63 de l'autre cassette et les ouvertures 67 du chariot rotatif pour pousser la cassette hors dudit chariot. La figure 18 montre que la cassette en question est ainsi amenée dans le bac de réception 19 après avoir traversé l'ouverture 59.

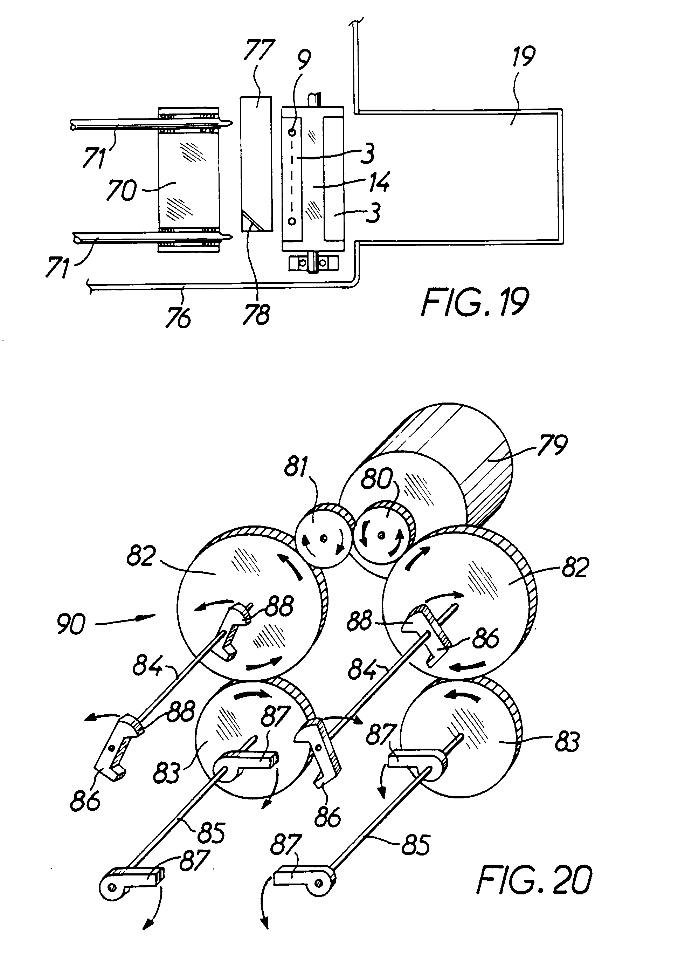

On a représenté schématiquement à la figure 19 l'implantation des mécanismes essentiels logés à l'intérieur du capot 76 de l'analyseur en bout duquel on voit le bac de réception 19. A la partie gauche se trouve la platine et le bloc de guidage 70 qui supportent les éjecteurs coulissants 71. A côté vient se placer un ensemble de lecture 77 du type code-barre qui est déplaçable avec la station de prélèvement ou le perceur mobile du genre de celui décrit en référence avec la première variante.

L'ensemble en question se trouve au voisinage immédiat du chariot rotatif 14 représenté ici en position de prélèvement. On y voit un tube 9 en position verticale, qui est en perçage, et en lecture par le code à barre dans la cassette 3 visible à gauche du chariot. Un miroir 78 prévu sur l'ensemble 77 permet la lecture successive des codes à barre du tube 9. L'autre alvéole du chariot renferme aussi une cassette 3 stockée pout préagitation.

On a vu précédemment que le chariot rotatif 14 est disposé sous l'alvéole 1 de l'analyseur et reçoit les cassettes 3 par gravité. Pour assurer le chargement dudit chariot on utilise un mécanisme désigné dans son ensemble par la référence 90 qui met en oeuvre un jeu de butées escamotables illustrées à la figure 20. Un moteur d'entraînement unique 79 entraîne, par l'intermédiaire d'un pignon moteur 80 et d'un pignon inverseur 81, deux pignons hauts 82 qui eux mêmes agissent sur deux pignons bas 83. Des axes hauts 84 et des axes bas 85 desdits pignons, se développant vers l'extérieur, portent respectivement chacun deux butées hautes 86 et deux butées basses 87. On voit que les butées hautes 86 ont la forme d'un cliquet symétrique par rapport à l'axe 84, les pointes 88 des butées hautes 86 étant orientées vers l'intérieur en direction de l'axe haut voisin. Par contre les butées basses 87 sont asymétriques, mais elles sont aussi orientées vers l'intérieur. Les butées hautes et basses peuvent donc basculer sous l'action du moteur unique 79.

Ledit système à butées escamotables est situé à la base de l'alvéole 1 et au dessus du chariot rotatif. Il a pour fonction de retenir et de distribuer une à une les cassettes dans le chariot. Les quatre butées hautes 86 peuvent soutenir une cassette par le dessus de leurs pointes supérieures ou par leurs pointes inférieures selon que les butées hautes sont inclinées, par rapport à la verticale, vers la zone intérieure ou extérieure des axes 84.

Les quatre butées basses 87 soutiennent une cassette quand elles sont en position horizontale, comme représenté à la figure 20, ou la libèrent quand elles sont en position verticale et écartent les clips 25 du chariot rotatif 14. On remarque que la position horizontale des butées basses 87 correspond à une position des butées hautes 86 dont les pointes supérieures sont inclinés vers l'intérieur (figure 20). Inversement, le moteur 79, par le jeu des pignons d'entraînement, peut modifier l'inclinaison des butées hautes en même temps que les butées basses se mettront en position verticale.

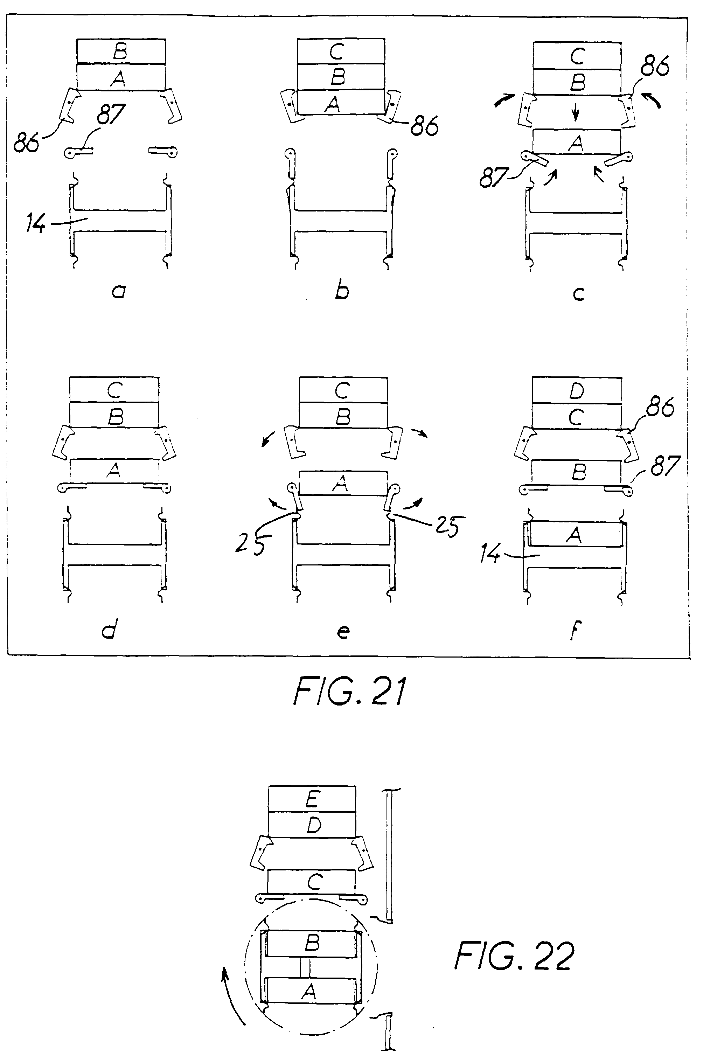

On a représenté à la figure 21 les principales phases de chargement des deux premières cassettes dans le chariot rotatif 14.

Au démarrage de l'opération (figure 21a), les cassettes A, B, C... sont dans l'alvéole 1 de l'analyseur et en appui au dessus des pointes supérieures des butées hautes 86. Les butées basses 87 sont horizontales et ne jouent pour le moment aucun rôle. Le moteur actionne ensuite les butées escamotables qui prennent une position inverse (figure 21b). La cassette A tombe alors et vient reposer sur les pointes inférieures des butées hautes 86. Une nouvelle inversion des butées illustrée par les flèches (figure 21c) va libérer la cassette A qui va descendre jusqu'aux butées basses 87. Simultanément les pointes supérieures des butées hautes 86 auront repris leur position initiale et soutiennent alors la cassette B. On arrive alors à la position représentée à la figure 21d. On comprend qu'une nouvelle inversion des butées (21c) dans le sens des flèches va entraîner l'écartement des clips et la chute de la cassette A dans le chariot rotatif mais aussi va libérer la cassette B qui descendra en appui contre les pointes inférieures des butées hautes. On voit qu'à chaque inversion de la position des butées, une cassette descend d'un pas. La figure 21f illustre l'aboutissement de cette première phase de chargement pour laquelle la première cassette A est en place dans le chariot rotatif, maintenue par les clips tandis que la deuxième cassette B est en attente au dessus des butées basses. Le chariot peut alors effectuer des rotations pour agiter la cassette A. Puis il s'immobilise cassette A au dessous (figure 22) et on peut charger la cassette B.

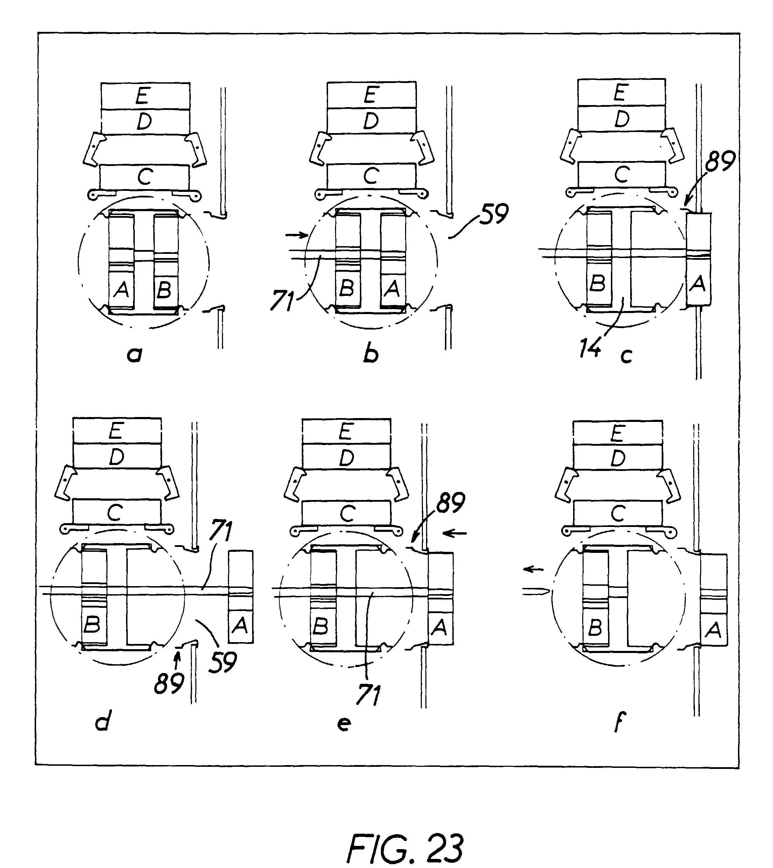

Après agitation le chariot prend la position verticale représentée à la figure 23a. Les tubes de la cassette A sont alors percés et prélevés par l'intermédiaire de la station de prélèvement. Puis le chariot rotatif effectue une rotation de 180° qui présente la cassette B au prélèvement (figure 23b). La cassette A est ultérieurement éjectée à l'aide des éjecteurs 71 qui se déplacent à cet effet de la gauche vers la droite (figure 23c) et dégagent la cassette A en direction du bac de réception au travers de l'ouverture 59. On remarquera que l'ouverture est bordée de clips anti-retour 89. Le mouvement se poursuit au-delà de l'ouverture (figure 23d), puis les éjecteurs font retour en sens inverse jusqu'à ce que la cassette A vienne en appui contre les clips anti-retour (flèche de la figure 23e). Les éjecteurs s'effacent ensuite vers la gauche (figure 23f). Le cycle de chargement et de prélèvement peut alors reprendre.

La station de prélèvement utilisée avec cette variante de réalisation est identique à celle de la première variante et a été décrite en référence à la figure 7. La variante de réalisation représentée aux figures 12 à 20 présente notamment l'avantage d'être d'un encombrement réduit, de mettre en oeuvre un nombre de pièces moins important, ce qui va dans le sens d'une diminution du prix de revient de l'appareil.

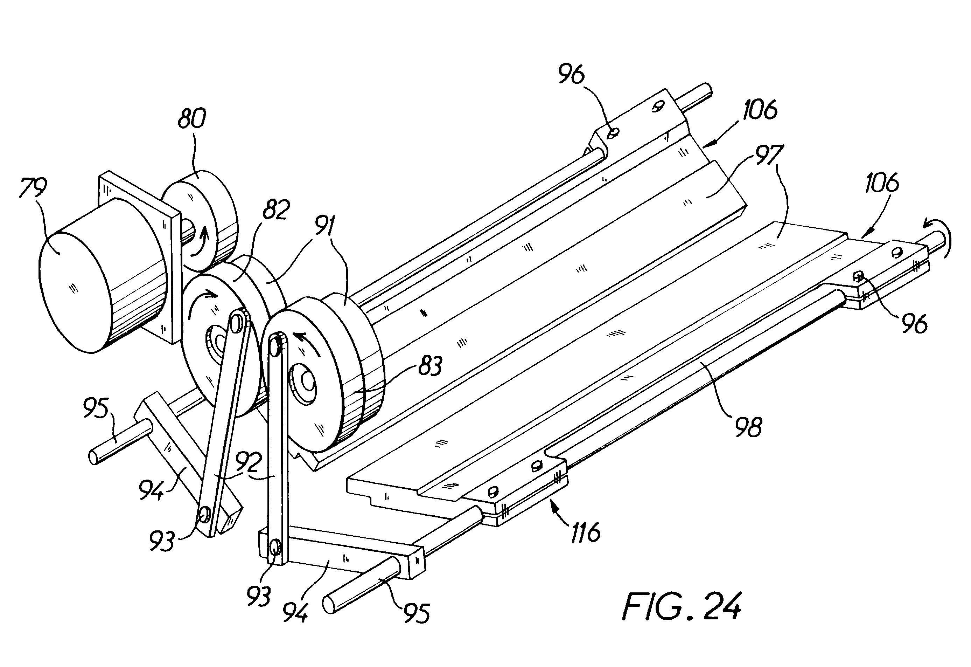

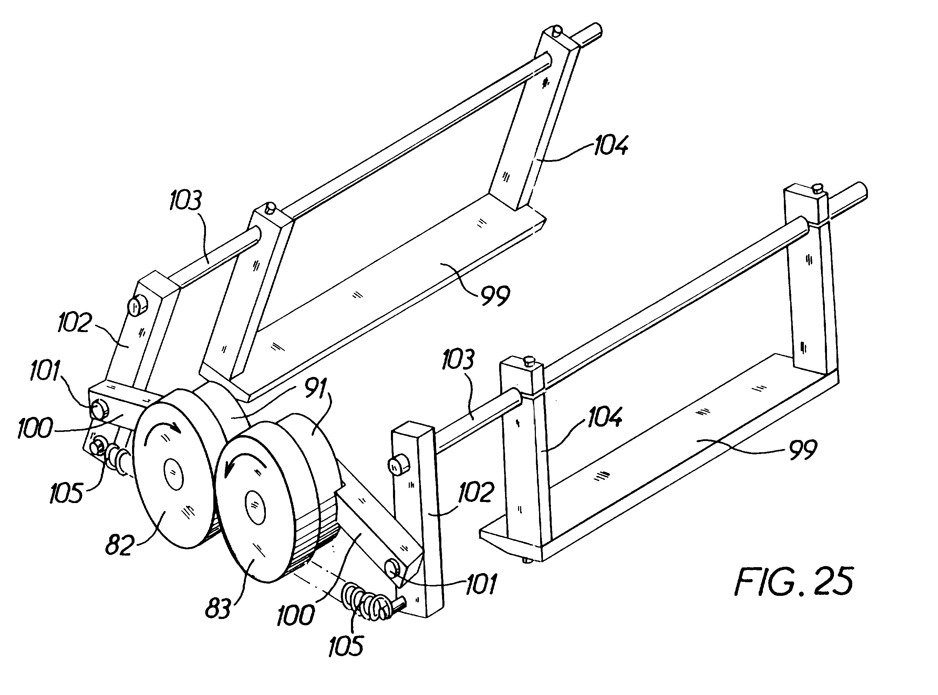

Une autre variante de réalisation d'un mécanisme de chargement 116 est décrite maintenant en référence aux figures 24 et 25. Elle diffère du mécanisme illustré aux figures 20 à 23 par les points suivants :

Le moteur d'entraînement unique 79 entraîne par l'intermédiaire du pignon moteur 80 deux pignons libres (82,83) chacun porteur d'une came 91. Sur chaque pignon libre est fixée de façon excentrique une bielle 92 articulée par l'intermédiaire d'un pivot 93 sur un levier 94 dont l'extrémité opposée est solidaire d'un axe horizontal inférieur 95 s'étendant sur toute la longueur de l'alvéole à cassettes. Grâce à des vis de blocage 96, un volet 97 est fixé sur l'axe 95. Dans sa partie centrale, le volet ménage une lumière 98 entre lui et l'axe. On notera que la face supérieure dudit volet est profilée en creux de façon à ménager sur une partie de sa surface une échancrure longitudinale 106.

D'autre part, comme on le voit plus précisément à la figure 25, chaque came 91 agit sur un ergot pivotant 99 par l'intermédiaire d'un levier de came 100 maintenu par son extrémité sur l'axe du pignon libre correspondant (82,83). L'extrémité opposée du levier de came 100 s'articule par un pivot 101 sur un levier de renvoi 102 dont l'extrémité opposée est solidaire d'un axe horizontal supérieur 103 s'étendant également sur toute la longueur de l'alvéole à cassettes. Par des potences 104 l'axe 103 porte l'ergot 99 se présentant comme une plaque sensiblement horizontale située au niveau de la lumière 98. La partie inférieure du levier de renvoi 102 est rappelée par un ressort 105.

Les différentes pièces précédemment décrites sont symétriques de part et d'autre d'un plan médian vertical situé entre les deux pignons libres. On comprend que le moteur 79 agisse ainsi simultanément sur les deux volets latéraux 97 et sur les deux ergots 99, pour les faire basculer.

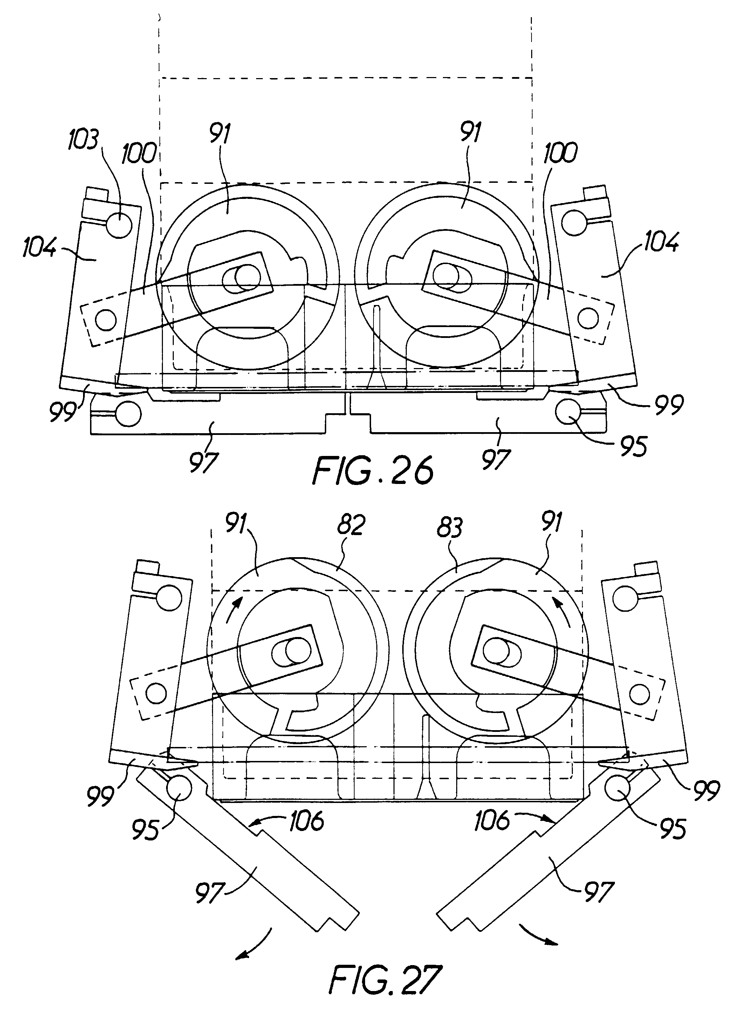

Les diverses phases de chargement des cassettes dans le chariot rotatif sont montrées aux figures 26 à 30.

La figure 26 illustre la position repos du mécanisme. Les volets 97 sont en position horizontale. Par contre les ergots 99 sont écartés en position ouverte, les potences 104 étant légèrement inclinées du fait de la position des leviers de came 100 commandés par les cames 91 solidaires du pignon libre correspondant. La pile de cassettes empilées dans l'alvéole repose donc sur les volets horizontaux 97.

Lors de la phase suivante (figure 27), le moteur a entraîné en rotation -en sens opposé comme le montrent les flèches-, les pignons libres (82,83).

Par l'intermédiaire des bielles 92 et leviers 94 (non visibles à la figure 27), les axes inférieurs 95 vont pivoter et les volets 97 vont s'ouvrir vers le bas. Lors de cette phase, le profil des cames 91 est tel que les ergots 99 restent dégagés comme dans la phase initiale. La pile de cassettes a donc amorcé un mouvement de descente en glissant dans le fond des échancrures 106 des volets.

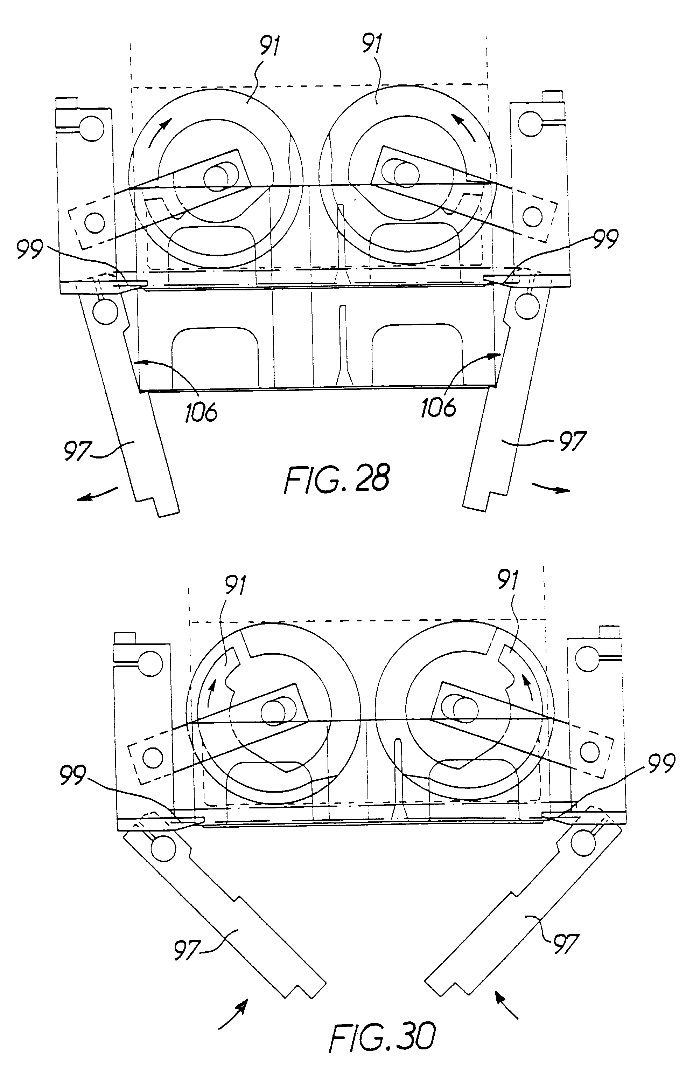

Le mouvement d'ouverture des volets 97 se poursuit (figure 28) et la pile de cassettes se trouve alors immobilisée sur les rebords des échancrures 106 prévues sur les volets. Simultanément les cames 91 ont commandé la fermeture rapide des ergots 99 grâce au ressort de rappel, qui traversent les lumières 98 et viennent bloquer la cassette suivante et immobiliser la pile.

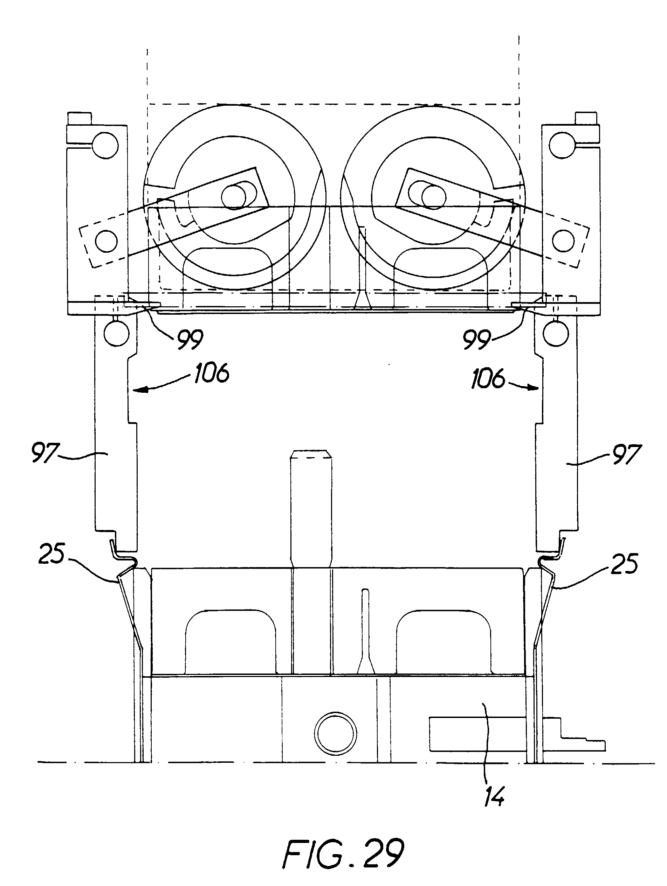

La figure 29 illustre la fin du mouvement d'ouverture des volets 97 qui se trouvent en position verticale. La première cassette a échappé des échancrures 106 et peut tomber dans l'alvéole du chariot rotatif 14. Les ergots 99 sont toujours fermés et bloquent la pile au-dessus de la cassette en cours de chargement. Les extrémités des volets 97 en phase terminale d'ouverture ont ouvert les clips 25 équipant le chariot rotatif, aussi la cassette peut elle pénétrer dans l'alvéole du chariot.

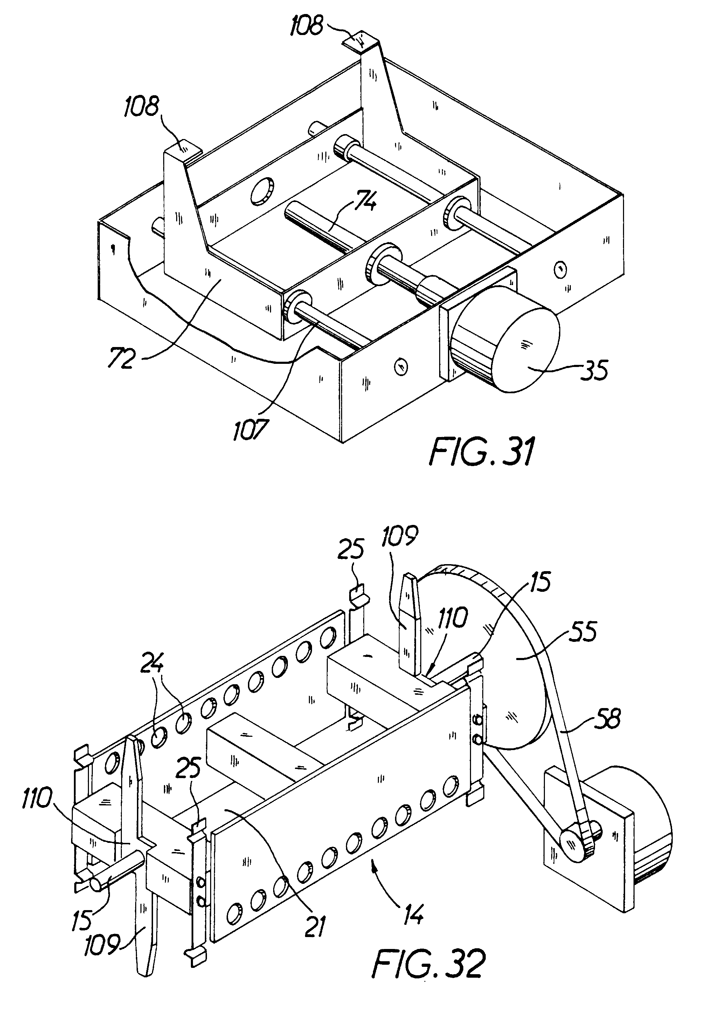

A la suite du chargement de cette cassette les volets 97 remontent (figure 30) tandis que les ergots 99 restent en position de blocage. Puis on se retrouve dans la position initiale de la figure 26 et le cycle de chargement peut se poursuivre.

Un avantage de ce dispositif à bielles et cames réside dans le fait que le cycle de fermeture et d'ouverture se fait par rotation dans le même sens d'un tour complet des pignons libres ce qui permet d'avoir un profil de came différent à la descente (premier demi-tour) et à la remontée (deuxième demi-tour) des volets. Cela autorise une descente sans heurts de toute la pile d'une hauteur d'une cassette, avant le blocage de cette pile, puis une chute progressive de la cassette à charger qui glisse le long des volets et enfin, lors de la remontée de ces derniers, une ouverture des ergots au dernier moment de telle sorte que la pile se retrouve en appui sur les volets sans à-coups.

Le mécanisme qui permet d'éjecter une cassette hors du chariot rotatif -selon une autre variante de réalisation- est représenté à la figure 31, dans laquelle on retrouve certaines références identiques à celles de la figure 17, pour les mêmes éléments. Le mécanisme de la figure 31 en diffère non dans le principe, mais dans le montage. On y retrouve un tiroir mobile 72 qui est entraîné par une vis tournante 74 mue par un moteur 35, et qui coulisse sur des axes de guidage 107. A sa partie supérieure, le tiroir mobile possède deux languettes horizontales 108 destinées à accrocher une cassette prête à être déchargée du chariot rotatif. A cet effet les cassettes sont équipées d'encoches avec des pentes d'entrée par lesquelles pénètrent lesdites languettes lors de la phase d'éjection.Cette variante a pour avantage de permettre l'opération d'éjection d'une cassette pendant l'opération de prélèvement de l'autre cassette.

Une variante de chariot rotatif adapté à cette variante Ce mécanisme de chargement est illustrée à la figure 32. Les mêmes éléments que ceux de la figure 16 portent les mêmes références. On a rajouté sur le chariot rotatif 14 des guides 109 de cassette se présentant comme des lamelles montées en bout de chaque berceau 21 et qui ont pour objet de guider la cassette lors de sa descente dans l'alvéole, en même temps que de la maintenir en position dans le sens de la longueur. Les guides 109 sont montés asymétriquement de part et d'autre de l'arbre de rotation 15. Autour de cet arbre un dégagement 110 est prévu aux deux bouts du chariot, qui autorise le stationnement des languettes 108 du mécanisme d'éjection, quand le chariot est en rotation.

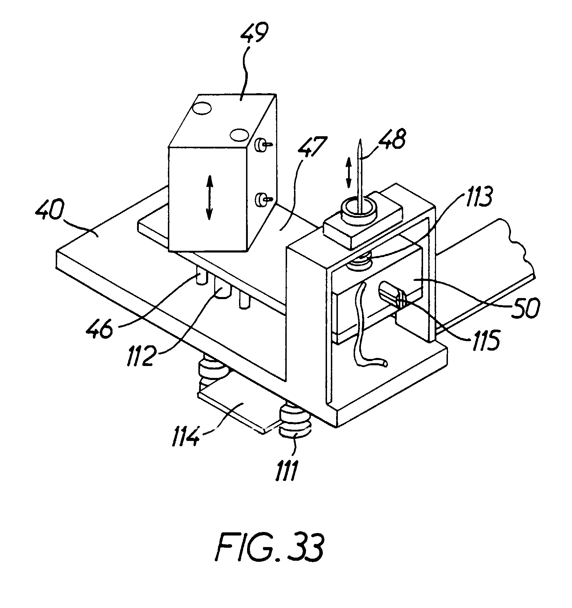

La figure 33 est une variante de réalisation du chariot perceur de la figure 7. Le socle 40 est monté sur des galets de guidage 111 coopérant avec un rail 114. La platine 47 est traversée par des colonnes de guidage 46 et par un axe 112 portant un vérin 49 du type à double effet antirotation. La platine est fixée rigidement au vérin. L'aiguille verticale de prélèvement 48 est montée sur un bloc 50 solidaire de la platine. Un soufflet 113 assure l'étanchéité de l'aiguille, maintenue par une pièce de verrouillage 115. Cette variante permet la réalisation du mouvement de perçage sans système d'axe et de bielle de renvoi.

## Revendications

1. Dispositif de transfert, d'agitation et de prélèvement d'échantillons de produits sanguins en tubes (9), regroupés dans des cassettes (3) disposées dans un réceptacle de stockage (1,2), notamment pour analyseurs hématologiques, dans lequel les cassettes sont transférées et positionnées dans une alvéole d'un chariot rotatif (14) assurant le mélange des échantillons, une station de prélèvement (16) étant déplaçable vis-à-vis des tubes temporairement immobilisés en position verticale, bouchon obturateur vers le bas, caractérisé en ce qu'un mécanisme (20, 90, 116) assure l'extraction de chaque cassette (3) garnie de tubes (9) d'échantillons hors du réceptacle de stockage (1, 2) et son transfert vers une alvéole du chariot rotatif (14), en ce que ledit chariot rotatif dispose de deux berceaux (21) en forme de U symétriques par rapport à son arbre de rotation (15), ouverts vers l'extérieur, berceaux qui servent d'alvéoles pour le maintien et le guidage des cassettes et en ce qu'un mécanisme complémentaire (29, 71, 108) assure l'éjection de la cassette vers un bac de réception (19).

2. Dispositif selon la revendication 1, caractérisé en ce que le panier de stockage (2) est pourvu en partie basse sur sa face arrière verticale (6) d'une lumière transversale (7), et en ce que une de ses parois latérales est percée d'une ouverture (37) en bout de la lumière pour le passage d'une cassette et d'une ouverture analogue (38) en partie haute.

3. Dispositif selon la revendication 1, caractérisé en ce que le chariot rotatif (14) dispose d'un corps central (26) entre les berceaux (21) qui est pourvu de clips de verrouillage (25) des cassettes.

4. Dispositif selon la revendication 1, caractérisé en ce que l'un des flancs d'un berceau (21) est ouvert à une de ses extrémités d'une encoche (23) et en ce que l'autre est percé d'une pluralité d'orifices (24) correspondant au nombre de tubes d'une cassette.

5. Dispositif selon la revendication 1, caractérisé en ce que des guides (109) de cassette sont montés aux extrémités de chaque berceau (21) du chariot rotatif (14), de part et d'autre de l'arbre de rotation (15) et ménagent un dégagement (110).

6. Dispositif selon les revendications 1 et 3, caractérisé en ce qu'une rainure de dégagement (27) est prévue sur le corps central (26), entre les berceaux (21), symétriquement par rapport à l'arbre (15).

7. Dispositif selon la revendication 1, caractérisé en ce qu'une poulie d'entraînement (55) du chariot rotatif (14) est percée de deux ouvertures rectangulaires (56) destinées au passage des cassettes en phase d'éjection.

8. Dispositif selon la revendication 1, caractérisé en ce que le mécanisme qui assure le déplacement et le positionnement d'une cassette dans une alvéole du chariot rotatif (14), ainsi que le mécanisme complémentaire assurant l'éjection de la cassette vers le bac de réception, sont formés par un unique chariot de chargement et d'éjection (20) qui se déplace du réceptacle de stockage (1, 2) au chariot rotatif et vice et versa en coulissant sur un organe de guidage linéaire (36), parallèlement à l'arbre (15) du chariot rotatif.

9. Dispositif selon les revendications 1 et 8, caractérisé en ce que le mécanisme complémentaire assurant l'éjection de la cassette est constitué par un ergot fixe (29), monté sur le chariot de chargement et d'éjection (20), se développant dans le sens de l'arbre (15) du chariot rotatif (14).

10. Dispositif selon les revendications 8 et 9, caractérisé en ce que le chariot de chargement et d'éjection (20) supporte un vérin (32) assurant la manoeuvre d'un doigt de chargement escamotable (31) se déplaçant perpendiculairement à l'arbre (15) du chariot rotatif (14).

11. Dispositif selon les revendications 9 et 10, caractérisé en ce que l'ergot d'éjection (29) est monté sur une potence (28) solidaire du chariot de chargement et d'éjection (20), ladite potence étant également percée d'un orifice (30) pour le passage du doigt de chargement escamotable (31).

12. Dispositif selon la revendication 8, caractérisé en ce que le chariot de chargement et d'éjection (20) est entraîné sur les axes des guides à billes (36) par une courroie crantée sans fin (33) entraînée par un moteur (35).

13. Dispositif selon les revendications 1 et 3, caractérisé en ce que le mécanisme (90) qui assure le positionnement d'une cassette dans une alvéole du chariot rotatif en écartant les clips de verrouillage (25) des cassettes, est constitué d'une pluralité de butées escamotables (86, 87) qui sont entraînées à basculer sous l'action d'un moteur unique (79) pour retenir et/ou libérer pas à pas, par gravité, les cassettes dans le chariot rotatif.

14. Dispositif selon la revendication 13, caractérisé en ce qu'une pluralité de butées hautes (86) sont montées au même niveau sur des axes hauts (84), en ce que une pluralité de butées basses (87) sont montées à un même niveau inférieur sur des axes bas (85), et en ce que lesdits axes sont entraînés simultanément en rotation.

15. Dispositif selon les revendications 13 et 14, caractérisé en ce que les axes hauts (84) et bas (85) se développent du côté opposé au moteur (79) respectivement à partir de deux pignons (82, 83) entraînés par ledit moteur par l'intermédaire d'un pignon moteur (80) et d'un pignon inverseur (81).

16. Dispositif selon les revendications 13 et 14, caractérisé en ce que les butées hautes (86) ont la forme d'un cliquet symétrique par rapport à leur axe (84), dont les pointes sont orientées en direction de l'axe haut voisin.

17. Dispositif selon les revendications 13 et 14, caractérisé en ce que les butées basses (87) sont asymétriques par rapport à leur axe (85) et orientées en direction de l'axe bas voisin.

18. Dispositif selon la revendication 1, caractérisé en ce que le mécanisme (116) qui assure le positionnement d'une cassette dans une alvéole du chariot rotatif (14) est constitué de deux volets (97) et de deux ergots (99) qui sont entraînés à basculer sous l'action d'un moteur unique (79) pour retenir la pile de cassettes et/ou libérer une cassette dans le chariot rotatif.

19. Dispositif selon la revendication 18, caractérisé en ce que le moteur (79) entraîne un pignon (82) qui lui-même entraîne un autre pignon (83), les deux pignons étant chacun porteur d'une bielle (92) agissant sur un volet (97) et d'une came (91) agissant sur un ergot pivotant (99).

20. Dispositif selon les revendications 18 et 19, caractérisé en ce que la bielle (92) est articulée sur un levier (94) dont l'extrémité est solidaire d'un axe horizontal inférieur (95) s'étendant sur toute la longueur de l'alvéole, et en ce que le volet (97) est fixé sur ledit axe.

21. Dispositif selon la revendication 20, caractérisé en ce que la face supérieure du volet (97) est profilée en creux de facon à ménager sur une partie de sa surface une échancrure longitudinale (106).

22. Dispositif selon les revendications 18 et 19, caractérisé en ce que la came (91) commande un levier de came (100) articulé sur un levier de renvoi (102) solidaire d'un axe horizontal supérieur (103) s'étendant sur toute la longueur de l'alvéole, et en ce que l'ergot (99) est fixé sur ledit axe.

23. Dispositif selon la revendication 1, dans lequel une aiguille verticale de prélèvement (48) dont la pointe est orientée vers le haut, est déplaçable verticalement en coulissant sur des colonnes de guidage (46) sous l'action d'un vérin (49), et est montée sur un socle mobile (40) de la station de prélèvement, caractérisé en ce que ledit socle mobile (40) supporte aussi une autre aiguille de microprélèvement (52) orientée vers le bas.

24. Dispositif selon la revendication 1, dans lequel une aiguille verticale de prélèvement (48) dont la pointe est orientée vers le haut et est déplaçable verticalement, caractérisé en ce qu'elle est montée sur une platine (47) traversée par un axe (112) portant un vérin (49) et en ce que ladite platine est fixée rigidement au vérin.

25. Dispositif selon les revendications 1 et 23, caractérisé en ce que la station de prélèvement (16) peut atteindre aussi un support fixe (17) d'un tube destiné à un prélèvement d'urgence, et autorise la lecture du code à barre qui se déplace avec le tube de prélèvement.

26. Dispositif selon la revendication 1, caractérisé en ce que le mécanisme complémentaire d'éjection d'une cassette (3) hors du chariot rotatif (14) est constitué de deux éjecteurs (71) coulissant dans un bloc de guidage fixe (70), éjecteurs dont la tête traverse des ouvertures du chariot rotatif pour pousser la cassette hors dudit chariot.

27. Dispositif selon la revendication 26, caractérisé en ce que les éjecteurs coulissants (71) sont déplacés par une vis tournante (74) entraînée par un moteur (35) solidaire du bloc de guidage (70).

28. Dispositif selon la revendication 1, caractérisé en ce que le mécanisme complémentaire d'éjection d'une cassette (3) hors du chariot rotatif 14 est constitué d'un tiroir mobile (72) portant deux languettes (108) pour l'accrochage d'une cassette.

29. Dispositif selon la revendication 1, caractérisé en ce que en sortie de l'appareil est prévu un poussoir (18) destiné à dégager les cassettes (3) en direction d'un panier de recueil (2) disposé à plat dans un bac de réception (19).

## Patentansprüche

1. Transport-, Schüttel- und Entnahmevorrichtung für Proben von Blutprodukten in Röhren (9), die in Kassetten (3) zusammengefaßt werden, welche wiederum in einen Aufbewahrungsbehälter gestellt werden (1, 2), insbesondere für hämatologische Analysatoren, wobei die Kassetten in eine Kammer eines Drehschlittens (14) transportiert und positioniert werden, womit die Vermischung der Proben gewährleistet wird. Eine Entnahmestelle (16), die hinsichtlich der Röhren verschiebbar ist, die zeitweise in vertikaler Position ruhiggestellt sind, mit dem gewindelosen Verschlußbolzen nach unten, und die dadurch gekennzeichnet ist, daß ein Mechanismus (20, 90, 116) die Abnahme jeder Kassette (3) gewährleistet, die außerhalb des Aufbewahrungsbehälters (1, 2) mit Probenröhrchen (9) bestückt ist, und deren Transport in eine Kammer des Drehschlittens (14), wobei dieser Drehschlitten über zwei U-förmige Träger (21) verfügt, die im Verhältnis zur Rotationsachse (15) symmetrisch und nach außen geöffnet sind. Die Träger dienen als Kammern zur Halterung und zur Führung der Kassetten, wobei ein zusätzlicher Mechanismus (29, 71, 108) den Auswurf der Kassette in einen Auffangbehälter (19) gewährleistet.

2. Vorrichtung gemäß Patentanspruch 1, die dadurch gekennzeichnet ist, daß der Aufbewahrungsbehälter (2) am unteren Teil der vertikalen Rückseite (6) mit einem schräg verlaufenden Schlitz (7) versehen ist und daß eine der Seitenwände am Ende des Schlitzes eine Öffnung (37) für die Durchführung der Kassette sowie eine entsprechende Öffnung (38) am Oberteil besitzt.

3. Vorrichtung gemäß Patentanspruch 1, die dadurch gekennzeichnet ist, daß der Drehschlitten (14) über ein Mittelteil (26) zwischen den Trägern (21) verfügt, das mit Clips zum Einrasten (25) der Kassetten versehen ist.

4. Vorrichtung gemäß Patentanspruch 1, die dadurch gekennzeichnet ist, daß eine der Seitenflächen eines Trägers (21) an einem Ende eine Kerbe (23) besitzt und das andere Ende mit einer Vielzahl von Öffnungen (24), entsprechend der Anzahl an Röhren in einer Kassette, versehen ist.

5. Vorrichtung gemäß Patentanspruch 1, die dadurch gekennzeichnet ist, daß an den Enden jedes Trägers (21) des Drehschlittens (14) die Kassettenführungen (109) auf beiden Seiten der Rotationsachse (15) angebracht sind, die einen Freiraum (110) aussparen.

6. Vorrichtung gemäß den Patentansprüchen 1 und 3, die dadurch gekennzeichnet ist, daß zwischen den Trägern (21) eine Einkerbung (27) auf dem Mittelteil (26) symmetrisch zur Achse (15) vorgesehen ist.

7. Vorrichtung gemäß Patentanspruch 1, die dadurch gekennzeichnet ist, daß eine Antriebsscheibe (55) des Drehschlittens (14) zwei rechteckige Öffnungen (56) besitzt, die für die Durchführung der Kassetten in der Auswurfphase bestimmt sind.

8. Vorrichtung gemäß Patentanspruch 1, die dadurch gekennzeichnet ist, daß der Mechanismus, der die Verschiebung und die Positionierung einer Kassette in eine Kammer des Drehschlittens (14) gewährleistet sowie der zusätzliche Mechanismus, der den Auswurf der Kassette zum Auffangbehälter gewährleistet, aus einem einzigen Lade- und Auswurfschlitten (20) besteht, der sich vom Aufbewahrungsbehälter (1, 2) zum Drehschlitten und umgekehrt verschiebt, indem er auf einem gradlinigen Führungsmittel (36) parallel zur Achse (15) des Drehschlittens läuft.

9. Vorrichtung gemäß den Patentansprüchen 1 und 8, die dadurch gekennzeichnet ist, daß der zusätzliche Mechanismus, der den Auswurf der Kassette gewährleistet, aus einem festen Zapfen (29) besteht, der am Lade- und Auswurfschlitten (20) angebracht ist und sich in Richtung der Achse (15) des Drehschlittens (14) entwikkelt.

10. Vorrichtung gemäß den Patentansprüchen 8 und 9, die dadurch gekennzeichnet ist, daß der Lade- und Auswurfschlitten (20) einen Zylinder (32) trägt, der die Bedienung mit einen einziehbaren Ladezapfen (31) gewährleistet, der sich senkrecht zur Achse (15) des Drehschlittens (14) verschiebt.

11. Vorrichtung gemäß den Patentansprüchen 9 und 10, die dadurch gekennzeichnet ist, daß der Auswurfzapfen (29) auf einem Arm des Lade- und Auswurfschlittens (20) befestigt ist, dieser Träger besitzt gleichfalls eine Öffnung (30) für die Durchführung des einziehbaren Ladezapfens (31).

12. Vorrichtung gemäß Patentanspruch 8, die dadurch gekennzeichnet ist, daß der Lade- und Auswurfschlitten (20) auf den Achsen der Kugelführungen (36) durch einen endlos gerippten Riemen (33), welcher durch einen Motor (35) angetrieben wird, gezogen wird.

13. Vorrichtung gemäß den Patentansprüchen 1 und 3, die dadurch gekennzeichnet ist, daß der Mechanismus (90), der die Positionierung einer Kassette in einer Kammer des Drehschlittens gewährleistet, indem die Clips zum Einrasten (25) der Kassetten auseinandergedrückt werden, aus einer Vielzahl von hochklappbaren Anschlägen (86, 87) besteht, die bei Betrieb eines einzelnen Motors (79) zum Kippen gebracht werden, um nach und nach mittels Schwerkraft die Kassetten im Drehschlitten zurüchzuhalten und/oder freizugeben.

14. Vorrichtung gemäß Patentanspruch 13, die dadurch gekennzeichnet ist, daß eine Vielzahl von oberen Anschlägen (86) auf gleicher Ebene an den oberen Achsen (84) angebracht werden, wobei eine Vielzahl von unteren Anschlägen auf der gleichen niedrigeren Ebene an den unteren Achsen (85) angebracht werden und diese Achsen gleichzeitig in eine rotierende Bewegung gebracht werden.

15. Vorrichtung gemäß den Patentansprüchen 13 und 14, die dadurch gekennzeichnet ist, daß sich die oberen (84) und unteren Achsen (85) zur entgegengesetzten Seite des Motors (79) entwickeln, und zwar jeweils von zwei Zahnrädern (82, 83) aus, die von diesem Motor mittels eines Antriebsrads (80) und eines Wenderads (81) angetrieben werden.

16. Vorrichtung gemäß den Patentansprüchen 13 und 14, die dadurch gekennzeichnet ist, daß die zwei oberen Anschläge (86) in bezug auf ihre Achse (84) die Form einer symmetrischen Sperrklinke besitzen, deren Spitzen in Richtung der benachbarten oberen Achse ausgerichtet sind.

17. Vorrichtung gemäß den Patentansprüchen 13 und 14, die dadurch gekennzeichnet ist, daß die unteren Anschläge (87) in bezug auf ihre Achsen (85) asymmetrisch sind und in Richtung der benachbarten unteren Achse ausgerichtet sind.

18. Vorrichtung gemäß Patentanspruch 1, die dadurch gekennzeichnet ist, daß der Mechanismus (116), der die Positionierung einer Kassette in eine Kammer eines Drehschlittens (14) gewährleistet, aus zwei Klappen (97) und zwei Zuhaltungsvorrichtungen (99) besteht, die bei Betrieb eines einzelnen Motors (79) dazu gebracht werden, zu kippen, um den Kassettenstapel zurückzuhalten und/oder eine Kassette im Drehschlitten freizugeben.

19. Vorrichtung gemäß Patentanspruch 18, die dadurch gekennzeichnet ist, daß der Motor (79) ein Zahnrad (82) antreibt, welches wiederum ein Zahnrad (83) antreibt, wobei beide Zahnräder Träger eines Zwischenglieds (92) sind, das auf eine Klappe (97) wirkt und dadurch, daß eine Nocke (91) auf eine schwenkbare Zuhaltungsvorrichtung wirkt.

20. Vorrichtung gemäß den Patentansprüchen 18 und 19, die dadurch gekennzeichnet ist, daß die Nocke (92) an einem Hebel (94) gelenkig angebracht ist, dessen Ende ein Stück mit einer niedrigeren horizontalen Achse (95) bildet, die sich auf die ganze Länge der Kammer erstreckt, wobei die Klappe (97) an dieser Achse befestigt ist.

21. Vorrichtung gemäß Patentanspruch 20, die dadurch gekennzeichnet ist, daß die Oberseite der Klappe (97) ein Hohlprofil besitzt und zwar so, daß auf einem Teil ihrer Oberfläche einen Längausschnitt (106) ausgespart ist.

22. Vorrichtung gemäß den Patentansprüchen 18 und 19, die dadurch gekennzeichnet ist, daß die Nocke (91) einen Nockenhebel (100) antreibt, der an einem Umlenkhebel (102) gelenkig angebracht ist, der ein Stück mit der oberen horizontalen Achse (103) bildet, die sich auf die ganze Länge der Kammer erstreckt, wobei die Zuhaltungsvorrichtung (99) an dieser Achse befestigt ist.

23. Vorrichtung gemäß Patentanspruch 1, die dadurch gekennzeichnet ist, daß eine vertikale Entnahmenadel (48), deren Spitze nach oben gerichtet ist, vertikal verschiebbar ist, indem sie über Führungssäulen (46) unter Wirken eines Zylinders (49) gleitet. Sie ist auf einem beweglichen Sockel (40) der Entnahmestelle angebracht, und die Vorrichtung ist dadurch gekennzeichnet, daß dieser bewegliche Sockel (40) gleichfalls eine weitere, nach unten gerichtete Nadel für die Mikroentnahme (52) trägt.

24. Vorrichtung gemäß Patentanspruch 1, bei der eine vertikale Entnahmenadel (48), deren Spitze nach oben gerichtet und vertikal verschiebbar ist, dadurch gekennzeichnet ist, daß sie auf einer Platte (47) montiert ist, die von einer Achse durchdrungen wird, welche einen Zylinder (49) trägt, wobei diese Platte starr mit dem Zylinder verbunden ist.

25. Vorrichtung gemäß den Patentansprüchen 1 und 23, die dadurch gekennzeichnet ist, daß die Entnahmestelle (16) gleichfalls eine feste Auflage (17) einer Röhre erreichen kann, die für eine Notentnahme bestimmt ist und die Ablesung des Strichcodes zuläßt, der sich mit der Entnahmeröhre verschiebt.

26. Vorrichtung gemäß Patentanspruch 1, die dadurch gekennzeichnet ist, daß der zusätzliche Auswurfmechanismus einer Kassette (3) aus dem Drehschlitten (14) aus zwei Ausstoßvorrichtungen (71) besteht, die in einem feststehenden Führungsblock (70) gleiten. Das obere Ende der Ausstoßvorrichtungen durchdringt die Öffnungen des Drehschlittens, um die Kassette aus diesem Schlitten zu stoßen.

27. Vorrichtung gemäß Patentanspruch 26, die dadurch gekennzeichnet ist, daß die gleitenden Ausstoßvorrichtungen (71) durch ein Gewinde (74), das von einem Motor (35) angetrieben wird, welcher ein Stück mit dem Führungsblock (70) bildet, verschoben werden.

28. Vorrichtung gemäß Patentanspruch 26, die dadurch gekennzeichnet ist, daß der zusätzliche Ausstoßmechanismus einer Kassette (3) aus dem Drehschlitten (14) heraus aus einem beweglichen Schieber (72) besteht, der zwei Zungen (108) zum Einhängen einer Kassette besitzt.

29. Vorrichtung gemäß Patentanspruch 1, die dadurch gekennzeichnet ist, daß am Ausgang des Geräts ein Ausstoß (18) vorgesehen ist, der die Kassetten (3) in Richtung eines Aufbewahrungsbehälters (2) freisetzen soll, der in einem Auffangbehälter (19) liegt.

## Claims

1. Device for transferring, agitating and sampling blood products in tubes (9), grouped together in cassettes (3) disposed in a storage receptacle (12), for use, in particular, in analyzers used in haemotology, wherein the cassettes are transferred and positioned in a cavity in a rotary carriage (14) which ensures the mixing of the samples, a sampling station (16) being displaceable opposite the tubes temporarily immobilized in a vertical position, with their closing bungs facing downwards, characterized in that a mechanism (20, 90, 116) ensures the extraction of each cassette (3) filled with tubes (9) of samples from the storage receptacle (1,2) and its transfers to a cavity in the rotary carriage (14), in that the said rotary carriage is provided with two U-shaped cradles (21) symmetrical in relation to its rotational shaft (15), opening outwards, which cradles serve as cavities to hold and guide the cassettes, and in that a complementary mechanism (29, 71, 108) causes the cassette to ejected towards a reception bin (19).

2. Device according to claim 1, characterized in that a storage tray (2) is provided in a lower portion on its vertical rear face (6) with a transverse aperture (7), and in that one of its side walls is pierced, at the end of the aperture, by an opening (37) to permit the passage of a cassette, and by an analogous opening (38) in the upper portion.

3. Device according to claim 1, characterized in that the rotary carriage (14) disposes of a central body (26) between the cradles (21) which is provided with clips (25) for locking the cassettes.

4. Device according to claim 1, characterized in that one of the sides of a cradle (21) opens at one of its ends in a slot (23), and in that the other is pierced by a plurality of orifices (24) corresponding to the number of tubes in a cassette.

5. Device according claim 1, characterized in that cassette guides (109) are mounted at the top of each cradle (21) of the rotary carriage (14), on either side of the rotational shaft (15) and provide a clear space (110).

6. Device according to claims 1 and 3, characterized in that a disengagement groove (27) is provided on the central body (26), between the cradles (21), symmetrically in relation to the shaft (15).

7. Device according to claim 1, characterized in that the drive pulley (55) of the rotary carriage (14) is pierced by two rectangular openings (56) designed to permit the passage of the cassettes in the ejection stage.

8. Device according to claim 1, characterized in that the mechanism that ensures the displacement and the positioning of a cassette in an alveole of the rotarv carriage (14), as well as the complementary mechanism ensuring the ejection of the cassette towards tne reception bin, are formed by a single loading and ejection carriage (20) which moves from the storage receptacle (1, 2) to the rotary carriage, and vice versa, by sliding along a linear guide member (36), parallel to the shaft (15) of the rotary carriage.

9. Device according to claims 1 and 8, characterized in that the complementary mechanism ensuring the ejection of the cassette is constituted by a fixed pin (29), mounted on the loading and ejecting carriage (20), extending in the direction of the shaft (15) of the rotary carriage (14).

10. Device according to claims 8 and 9, characterized in that the loading and ejecting carriage (20) supports a jack (32) ensuring the manoeuvering of a retractable loading finger (31) travelling perpendicularly to the shaft (15) of the rotary carriage (14).

11. Device according to claims 9 and 10, characterized in that the ejection pin (29) is mounted on a bracket (28) integral with the loading and ejecting carriage (20), the said bracket also being pierced by an orifice (30) to permit the passage of the retractable loading finger (31).

12. Device according to claim 8, characterized in that the loading and ejecting carriage (20) is driven along the rods of ball bearing-mounted guides (36) by an endless serrated belt (33) driven by a motor (35).

13. Device according to claim 1, characterized in that the mechanism (90) that ensures the positioning of a cassette in an alveole of the rotary carriage by opening the clips (25) is constituted by a plurality of retractable stops (86, 87) which are driven to tilt through the action of a single motor (79) to retain and/or release the cassettes into the rotary carriage, step by step, through the effect of gravity.

14. Device according to claim 13, characterized in that a plurality of top stops (86) are mounted at the same level on top pins (84), in that a plurality of bottom stops (87), are mounted at the same, lower, level on bottom pins (85), and in that the said pins are driven in rotation simultaneously.

15. Device according to claims 13 and 14, characterized in that the top pins (84) and bottom pins (85) extend at the opposite side of the motor (79) respectively from two pinions (82, 83) driven by said motor via a drive pinion (80) and a reversing pinion (81).

16. Device according to claims 13 and 14, characterized in that the top stops (86) take the form of a catch symmetrical in relation to their axis (84), the tips of which are orientated inwards in the direction of the adjacent top pin.

17. Device according to claims 13 and 14, characterized in that the bottom stops (87) are asymmetrical in relation to their pins (85) and orientated inwards in the direction of the adjacent bottom pins.

18. Device according to claim 1, characterized in that the mechanism (116) which ensures the positioning of a cassette in a cavity in the rotary carriage (14) is constituted by two flaps (97) and by two members (99) which are driven to tilt by the action of a single motor (79) to retain the stack of cassettes and/or to release a cassette into the rotary carriage.

19. Device according to claim 18, characterized in that the motor (79) drives one pinion (82) which itself drives another pinion (83), each carrying a rod (92) acting on a flap (97) and a cam (91) acting on a pivoting member (99).

20. Device according to claims 18 and 19, characterized in that the rod (92) is articulated on a lever (94), the end of which is integral with a lower horizontal pin (95) extending over the entire length of the alveole, and in that the flap (97) is fixed on the said pin.

21. Device according to claim 20, characterized in that the upper face of the flap (97) is hollowed so as to provide on a portion of its surface a longitudinal grove (106).

22. Device according to claims 18 and 19, characterized in that the cam (91) controls a cam lever (100) articulated on a return lever (102) integral with an upper horizontal pin (103) extending over the entire length of the alveole, and in that the member (99) is fixed on the said pin.

23. Device according to claim 1, in which a vertical sampling needle (48), the tip of which is upwardly orientated, is displaceable vertically by sliding over guide columns (46) under the action of a jack (49), and is mounted on a mobile base (40) of the sampling station, characterized in that the said mobile base (40) also supports another, micro-sampling needle (52) orientated downwards.

24. Device according to claim 1, in which a vertical sampling needle (48), the tip of which is orientated upwards, is vertically displaceable, characterized in that it is mounted on a plate (47) through which passes a pin (112) bearing a jack (49), and in that the said plate is rigidly fixed to the jack.

25. Device according to claims 1 and 23, characterized in that the sampling station (16) can also reach a fixed support (17) of a tube intended for priority sampling, and permits the reading of the bar code that is displaced with the sampled tube.

26. Device according to claim 1, characterized in that the complementary mechanism for ejecting a cassette (3) from the rotary carriage (14) is constituted by two ejectors (71) sliding in a fixed guide block (70), of which ejectors the heads pass through openings in the rotary carriage to push the cassette out of the said carriage.

27. Device according to claim 26, characterized in that the sliding ejectors (71) are displaced by a rotating screw (74) driven by a motor (35) integral with the guide block (70).

28. Device according to claim 1, characterized in that the complementary mechanism for ejecting a cassette (3) out of the rotary carriage 14 is constituted by a mobile drawer member (72) bearing two tabs (108) for engaging with a cassette.

29. Device according to claim 1, characterized in that, at the output from the apparatus is provided a pusher (18) designed to disengage the cassettes (3) in the direction of a collecting tray (2) placed flat in a reception bin (19).
